# EUROPEAN PATENT APPLICATION

(11) **EP 2 247 128 A1**
(43) Date of publication of application: **03.11.2010**
(21) Application number: 09712593.4
(22) Date of filing: 19.02.2009
(51) Int. Cl.: H04W 4/06, G08G 1/09, G08G 1/14, H04N 7/173, H04W 4/02, H04W 4/04, H04W 64/00, H04W 88/06, G01C 21/00

(54) **INFORMATION PROVIDING SYSTEM, TERMINAL FOR TRANSMITTING/RECEIVING INFORMATION, AND INFORMATION PROVIDING METHOD**

(30) Priority: 21.02.2008 JP 2008040577
(71) Applicant: Kabushiki Kaisha Kenwood, Hachiouji-shi Tokyo 192-8525 (JP)
(72) Inventor: NAGATOMO, Hideyuki, Kawasaki-shi Kanagawa 214-0023 (JP)
(74) Representative: Leinweber & Zimmermann
(86) International application number: PCT/JP2009/052850
(87) International publication number: WO 2009/104663

(57) **Abstract**

An information provision system (10) includes a vehicle-mounted DSRC device (20) which is a terminal to be mounted on a vehicle (100) and capable of receiving contents for the members and contents for the nonmembers distributed by a predetermined communication system, a roadside apparatus (40) which is a base station capable of transmitting contents to the vehicle-mounted DSRC device (20), and an information providing server (60) capable of providing contents to the roadside apparatus (40). The information providing server (60) includes a control unit for checking the communication environment which the vehicle-mounted DSRC device (20) or the roadside apparatus (40) has. The vehicle-mounted DSRC device (20) includes a control unit for performing at least three processes: an admission pre-processing for enabling reception of contents for the members or withdrawal pre-processing of disabling the reception, a storing processing of storing the performed pre-processing, and a transmission processing of transmitting the stored pre-processing to the roadside apparatus (40) when the vehicle-mounted DSRC device (20) enters the area where the vehicle-mounted DSRC device (20) can communicate with the roadside apparatus (40). With this constitution, the user can receive only truly useful information.

## Description

### TECHNICAL FIELD

The present invention relates to an information provision system, a terminal for information transmission/reception, and an information provision method.

### BACKGROUND ART

Patent Document 1 discloses an information provision system in which communication is performed between a roadside machine provided on a road and a vehicle-mounted information terminal device provided in a vehicle with the use of DSRC (dedicated short-range communication) to provide advertisement information only about surrounding areas for the vehicle passing near the roadside machine. The advertisement information provided by this information provision system is displayed on the display of the vehicle-mounted information terminal device so that it can be notified to the persons in the vehicle.

Patent Document 2 discloses an advertisement distribution system in which a center apparatus and a vehicle-mounted device perform mutual communication so that advertisement information about the region of the current location can be received. The advertisement information provided by this advertisement distribution system is displayed outward from the vehicle so that it can be notified to persons in other vehicles without the vehicle-mounted DSRC device.
Patent Document 1
   Japanese Patent Application Laid-Open No. 2001-101587 (CLAIMS and the like)
Patent Document 2
   Japanese Patent Application Laid-Open No. 2004-279509 (CLAIMS and the like)

### DISCLOSURE OF THE INVENTION

### PROBLEMS TO BE SOLVED BY THE INVENTION

However, the advertisement information distributed by the systems disclosed in Patent Document 1 and Patent Document 2 is advertisement information aimed at the general public, which is distributed without identifying individuals and is not necessarily useful information for users.

Providers who provide services and commodities give benefits, such as coupons and points to users, desiring to increase the number of repeaters who visit their stores again. Actually, however, the repeat rate does not rise. This is the same for the case of utilizing the advertisement distribution system of Patent Document 1 or Patent Document 2.

Accordingly, the object of the present invention is to provide an information provision system making it possible for a user to receive only such information that is really useful for the user, a terminal for information transmission/reception, and an information provision method.

### MEANS FOR SOLVING THE PROBLEMS

According to a first aspect of the present invention, the information provision system according to the present invention for solving the above problem is an information provision system including a terminal mounted on a vehicle and capable of receiving contents for members and contents for nonmembers distributed by a predetermined communication system, a base station capable of transmitting both of the contents to the terminal, and an information providing server capable of providing both of the contents to the base station, wherein the information providing server includes a control unit for checking the communication environment which the terminal or the base station has; and the terminal includes a control unit for performing at least three processes: an admission pre-processing for enabling reception of the contents for members or withdrawal pre-processing for disabling the reception, a storing process of storing the performed pre-processing or information obtained by the pre-processing, and a transmission process of transmitting the pre-processing or the content of the information to the base station when the terminal enters an area where the terminal can communicate with the base station.

Furthermore, in the information provision system according to the present invention, the control unit of the information providing server judges whether or not the base station is capable of connecting to another communication network, identifies means for performing the pre-processing on the basis of the result of the judgment and transmits information for the identified means.

In the information provision system according to the present invention, the control unit of the information providing server identifies the means for performing the pre-processing on the basis of characteristics information about the terminal transmitted from the terminal and transmits the information for the identified means.

Furthermore, in the information provision system according to the present invention, if both of the base station and the terminal are capable of connecting to another same communication network, the information providing server causes the terminal to connect to that another communication network compulsorily and urges the pre-processing.

In the information provision system according to the present invention, when the information providing server receives the pre-processing or the content of the information by the transmission process, the control unit of the information providing server transmits information informing that an admission process or a withdrawal process has been completed depending on the content, to the terminal.

In the information provision system according to the present invention, it is assumed that: the pre-processing is a process of (1) connecting to a home page on the Internet of an enterpriser with authorization of admission or withdrawal by another apparatus and (2) performing an admission or withdrawal process on the home page; and the storing process is a process of storing the result of the process into the terminal.

In the information provision system according to the present invention, it is assumed that: the storing process includes (1) a process of temporarily registering the performed pre-processing with the terminal, (2) a confirmation process of the control unit of the terminal generating a screen for confirming whether the process is correct, and (3) a process of making a formal registration with the terminal if the correctness is confirmed by the confirmation process.

In the information provision system according to the present invention, it is assumed that: the pre-processing is a process of (1) the control unit of the information providing server judging that the terminal is not authorized to receive or display the contents for members, (2) the information providing server transmitting invitation contents for invitation to membership to the terminal via the base station, on the basis of the judgment, and (3) performing an admission process using another communication network on the basis of the invitation contents; and the storing process is a process of recording a targeted enterpriser code in an enterpriser code field in the terminal.

In the information provision system according to the present invention, it is assumed that the invitation contents include an image on which a code enabling connection to a homepage on the Internet of an enterpriser with authorization of admission is displayed.

Furthermore, in the information provision system according to the present invention, it is assumed that: the pre-processing is a process of (1) the information providing server transmitting contents for a withdrawal process to the terminal, (2) displaying the contents for the withdrawal process on a display unit of the terminal, and (3) performing the withdrawal process using other means such as another communication network on the basis of information on a displayed screen, and the storing process is a process of deleting a targeted enterpriser code in the terminal.

According to a second aspect of the present invention, the terminal for information transmission/reception of the present invention is a terminal for information transmission/reception mounted on a vehicle and capable of receiving contents for members and contents for nonmembers distributed from a base station by a predetermined communication system, and the terminal is provided with a control unit for performing at least three processes: an admission pre-processing for enabling reception of the contents for members or withdrawal pre-processing for disabling the reception, a storing process of storing the performed pre-processing or information obtained by the pre-processing, and a transmission process of transmitting the pre-processing or the content of the information to the base station when the terminal enters an area where the terminal can communicate with the base station.

According to a third aspect of the present invention, the information provision method of the present invention is an information provision method used for an information provision system including a terminal mounted on a vehicle and capable of receiving contents for members and contents for nonmembers distributed by a predetermined communication system, a base station capable of transmitting both of the contents to the terminal, and an information providing server capable of providing both of the contents to the base station, and the method includes: a pre-processing step of performing an admission process of enabling reception of the contents for members or withdrawal pre-processing for disabling reception; a storing process step of storing the performed pre-processing or information obtained by the pre-processing; and a transmission process step of transmitting the pre-processing or the content of the information to the base station when the terminal enters an area where the terminal can communicate with the base station.

### EFFECT OF THE INVENTION

The present invention can provide an information provision system making it possible for a user to receive only such information that is really useful for the user, a terminal for information transmission/reception, and an information provision method.

### BRIEF DESCRIPTION OF THE DRAWINGS

FIG. 1 is a diagram showing the configuration of the whole information provision system according to an embodiment of the present invention;
FIG. 2 is a diagram showing the state in which a vehicle-mounted DSRC device and a roadside apparatus in the information provision system shown in FIG. 1 are communicating with each other;
FIG. 3 is a block diagrams showing the main configuration of the vehicle-mounted DSRC device shown in FIG. 1;
FIG. 4 is a block diagrams showing the main configurations of the roadside apparatus and an information providing server shown in FIG. 1;
FIG. 5 is a diagram showing a transaction conducted between the vehicle-mounted DSRC device and the roadside apparatus shown in FIG. 1;
FIG. 6 is a diagram showing the schematic configuration of digital data in a multi-contents format to be distributed to the vehicle-mounted DSRC device in the information provision system shown in FIG. 1;
FIG. 7 is a diagram showing the configuration of enterpriser information in the digital data shown in FIG. 6;
FIG. 8 is a diagram showing the configuration of contents information in the digital data shown in FIG. 6;
FIG. 9 is a diagram showing the configuration of reproduction condition information in the digital data shown in FIG. 6;
FIG. 10 is a diagram showing the configuration of expiration date information in the digital data shown in FIG. 6;
FIG. 11 is a diagram showing the configuration of provision time information in the digital data shown in FIG. 6;
FIG. 12 is a diagram showing the configuration of target point information in the digital data shown in FIG. 6;
FIG. 13 is a diagram showing the configuration of information provision point information in the digital data shown in FIG. 6;
FIG. 14 is a diagram showing the configuration of transition information in the digital data shown in FIG. 6;
FIG. 15 is a diagram showing the configuration of details information in the digital data shown in FIG. 6;
FIG. 16 is a diagram showing the configuration of parking lot information in the digital data shown in FIG. 6;
FIG. 17 is a diagram showing the configuration of driving support information in the digital data shown in FIG. 6;
FIG. 18 is a diagram showing the configuration of taste information in the digital data shown in FIG. 6;
FIG. 19 is a diagram showing an example of a screen displaying the contents of the taste information shown in FIG. 6;
FIG. 20 is a diagram showing contents information included under ID=10 shown in FIG. 6 in a tree structure;
FIG. 21 is a diagram showing a frame example of data in the multi-contents format used in the information provision system shown in FIG. 1;
FIG. 22 is a diagram showing a data format in uplink performed from the vehicle-mounted DSRC device shown in FIG. 1 to the roadside apparatus;
FIG. 23 is a diagram showing the kinds of admission process and main process steps in the information provision system shown in FIG. 1;
FIG. 24 is a flowchart showing a series of processes of admission and withdrawal in the information provision system shown in FIG. 1;
FIG. 25 shows an example of an invitation-for-admission screen displayed on the vehicle-mounted DSRC device in the information provision system shown in FIG. 1;
FIG. 26 shows another example of the invitation-for-admission screen displayed on the vehicle-mounted DSRC device in the information provision system shown in FIG. 1, which is a screen example at the time of using an apparatus other than the vehicle-mounted DSRC device;
FIG. 27 shows an example of a notification screen displayed on the vehicle-mounted DSRC device in the information provision system shown in FIG. 1, which is a screen example at the time when an enterpriser code has not been inputted to the vehicle-mounted DSRC device though a pre-processing (application for a contract) has ended;
FIG. 28 shows an example of a withdrawal screen displayed on the vehicle-mounted DSRC device in the information provision system shown in FIG. 1;
FIG. 29 shows an example of the notification screen displayed on the vehicle-mounted DSRC device in the information provision system shown in FIG. 1, which is a screen example at the time when the enterpriser code has not been deleted from the vehicle-mounted DSRC device though a pre-processing (contract cancellation) has ended;
FIG. 30 shows still another screen example of the invitation-for-admission screen displayed on the vehicle-mounted DSRC device in the information provision system shown in FIG. 1; and
FIG. 31 shows an example of the notification screen displayed on the vehicle-mounted DSRC device in the information provision system shown in FIG. 1, which is a screen example notified when distribution of contents to members in a communication area ends completely.

### DESCRIPTION OF REFERENCES

- 10: information provision system
- 20: vehicle-mounted DSRC device
- 21: DSRC unit (communication unit)
- 22: transceiver unit/modulation & demodulation unit (a part of communication unit)
- 23: DSRC control unit (a part of the communication unit)
- 24: DSRC-ASL processing unit (a part of the communication unit)
- 25: memory unit
- 34: control unit (control unit of a terminal)
- 40: roadside apparatus (base station)
- 60: information providing server
- 66: control unit (control unit of the information providing server)

### BEST MODES FOR CARRYING OUT THE INVENTION

An information provision system, a terminal for information transmission/reception and an information provision method according to an embodiment of the present invention will be described below on the basis of drawings. In the description below, the terminal for information transmission/reception and the information provision method will be also described in the description of an information provision system 10.

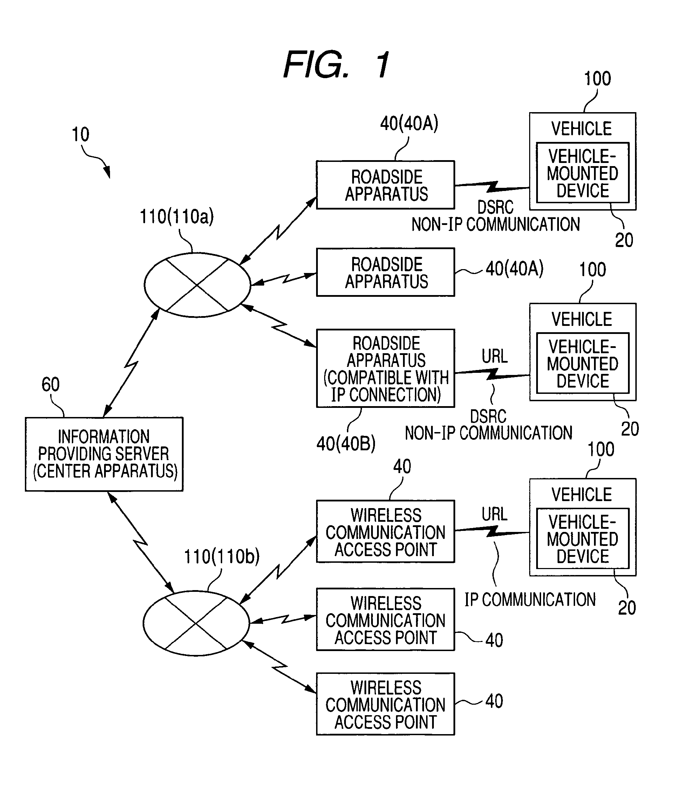

FIG. 1 is a diagram showing the configuration of the whole information provision system 10 according to the embodiment of the present invention. As shown in FIG. 1, the information provision system 10 has vehicle-mounted DSRC devices 20 as terminals to be mounted on vehicles 100, roadside apparatuses 40 as base stations to be arranged along roads, in parking lots and near roads or parking lots, an information providing server 60 connected to the roadside apparatuses 40 via a wireless or wired communication network 110, such as the Internet, to be a center apparatus for providing multiple contents for the roadside apparatuses 40, as main components.

As shown in FIG. 1, the information providing server 60 is connected to multiple roadside apparatuses 40A and 40B provided on roads, in parking lots, at roadside stations and the like, via an ITS communication network 110a which is a network exclusively for DSRC. Each of the roadside apparatuses 40A and 40B is configured to be wirelessly communicable with the vehicle-mounted DSRC devices 20 equipped with a DSRC communication function, and, when communication with a vehicle-mounted DSRC device 20 is established, notifies the information providing server 60 to that effect, receives contents information from the information providing server 60 and transmits it to the vehicle-mounted DSRC device 20. The roadside apparatuses 40A perform communication (referred to as DSRC non-IP communication) with the vehicle-mounted DSRC device 20 and the information providing server 60 in accordance with its own protocol exclusively for DSRC. The roadside apparatuses 40B perform communication (referred to as DSRCIP communication) with the vehicle-mounted DSRC device 20 and the information providing server 60 in accordance with the Internet protocol (IP).

The information providing server 60 is also connected to a general communication network 110b which is an external network. The general communication network 110b includes wireless communication networks such as the Internet, and mobile communication networks, wireless LANs (local area networks) and WiMAX (Worldwide Interoperability for Microwave Access) connected to the Internet. When receiving a request to acquire contents information from a vehicle-mounted DSRC device 20 via the general communication network 110b, the information providing server 60 transmits the required contents information to the vehicle-mounted DSRC device 20.

Here, the contents information which the information providing server 60 provides for the vehicle-mounted DSRC device 20 via the roadside apparatus 40A is, for example, introduction to services by various facilities such as stores, parking lots, medical facilities and the like around the vehicle 100. The contents information will be hereafter referred to as first contents information. The contents information which the information providing server 60 provides for the vehicle-mounted DSRC device 20 via the general communication network 110b or via the roadside apparatus 40B may be an HTML file for displaying a webpage on the vehicle-mounted DSRC device 20, multimedia contents and the like, such as image information and music information, provided via the webpage, and the like. The contents will be hereafter referred to as second contents information.

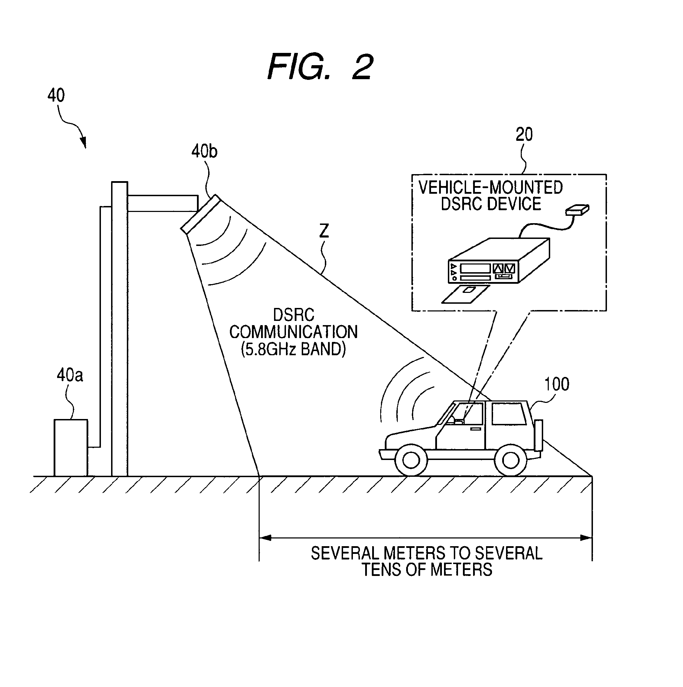

FIG. 2 is a diagram showing the communication state between the vehicle-mounted DSRC device 20 and roadside apparatus 40. As shown in FIG. 2, the roadside apparatus 40 (40A or 40B) is configured to have a body apparatus 40a and an antenna 40b. The roadside apparatuses 40A and 40B radiate a DSRC radio wave which reaches within a limited distance, from the antenna 40b installed at a road side, above a road, or in a parking lot or road station and form a roadside area Z nearby which is to be a communication area. It becomes possible to perform two-way short-range wireless communication only with the vehicle-mounted DSRC device 20 in a vehicle 100 existing in this roadside area Z.

DSRC is a communication system using 5.8 GHz band radio waves, and the communication range is, for example, several meters to several tens of meters. Since all of DSRC transmission outputs from the roadside apparatuses 40A and 40B are set to be of the same level, the roadside area Z formed by each of the multiple roadside apparatuses 40A and 40B is almost constant irrespective of the installation location.

The body apparatus 40a performs a process of mediating exchange of information between the vehicle-mounted DSRC device 20 and the information providing server 60. That is, the body apparatus 40a transfers information received from the vehicle-mounted DSRC device 20 via the antenna 40b, to the information providing server 60 via the ITS communication network 110a, and transfers the first or second contents information transmitted from the information providing server 60, to the vehicle-mounted DSRC device 20. A computer terminal provided with a control unit for performing information processing or communication control, a storage unit and the like is applied to the body apparatus 40a.

A control unit of the body apparatus 40a of the roadside apparatus 40A controls communication with the vehicle-mounted DSRC device 20 in accordance with the protocol exclusive for DSRC. A control unit of the body apparatus 40a of the roadside apparatus 40B controls communication with the vehicle-mounted DSRC device 20 according to the communication environment of the vehicle-mounted DSRC device 20, in accordance with the Internet protocol or the protocol exclusive for DSRC.

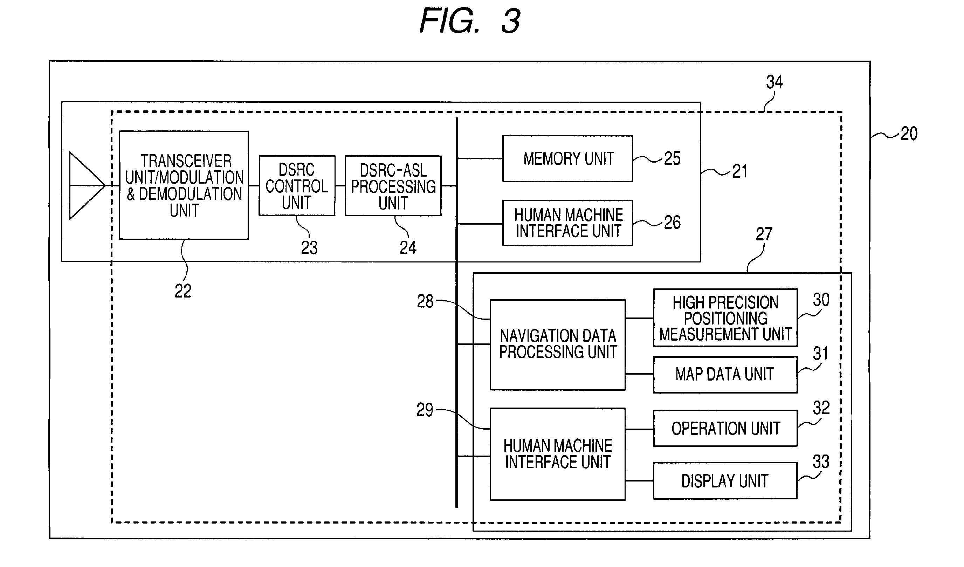

FIG. 3 is a block diagram showing the configuration of the vehicle-mounted DSRC device 20 shown in FIG. 1. As shown in FIG. 3, the vehicle-mounted DSRC device 20 has a DSRC unit 21, a navigation unit 27, and a control unit 34 controlling them, as main components. Specific explanation will be made below.

As shown in FIG. 3, the DSRC unit 21 further has a transceiver unit/modulation & demodulation unit 22, a DSRC control unit 23, a DSRC-ASL processing unit 24, a memory unit 25 and a human machine interface unit 26 as main components.

The transceiver unit/modulation & demodulation unit 22 is implemented with an interface in conformity with "ARIB STD-T75" (an interface corresponding to the physical layer of the DSRC protocol). The transceiver unit/modulation & demodulation unit 22 has a function of performing digital modulation/demodulation of a received radio wave (ASK/QSPK). The DSRC control unit 23 performs DSRC communication with the roadside apparatus 40. Specifically, the DSRC control unit 23 is implemented with an interface in conformity with "ARIB STD-T75" (an interface corresponding to the data link layer and application layer of the DSRC protocol) and is capable of performing 5.8 GHz band wireless communication with the roadside apparatus 40. Furthermore, the DSRC control unit 23 can identify a corresponding application in the vehicle-mounted DSRC device 20, which is a communication counterpart of the roadside apparatus 40, from an identifier (EID) included in the frame of received data.

The DSRC-ASL processing unit 24 provides a basic application process and security platform. Specifically, the DSRC-ASL processing unit 24 is implemented with a communication interface in conformity with "ARIB STD-T88" and performs communication control by DSRC-ASL between each application installed in the vehicle-mounted DSRC device 20 and the roadside apparatus 40.

The above-stated transceiver unit/modulation & demodulation unit 22, the DSRC control unit 23 and the DSRC-ASL processing unit 24 provide a communication interface for each of so-called IP system communication using the IP (Internet Protocol) and so-called non-IP system communication in which communication control is performed by other communication protocols without using the IP.

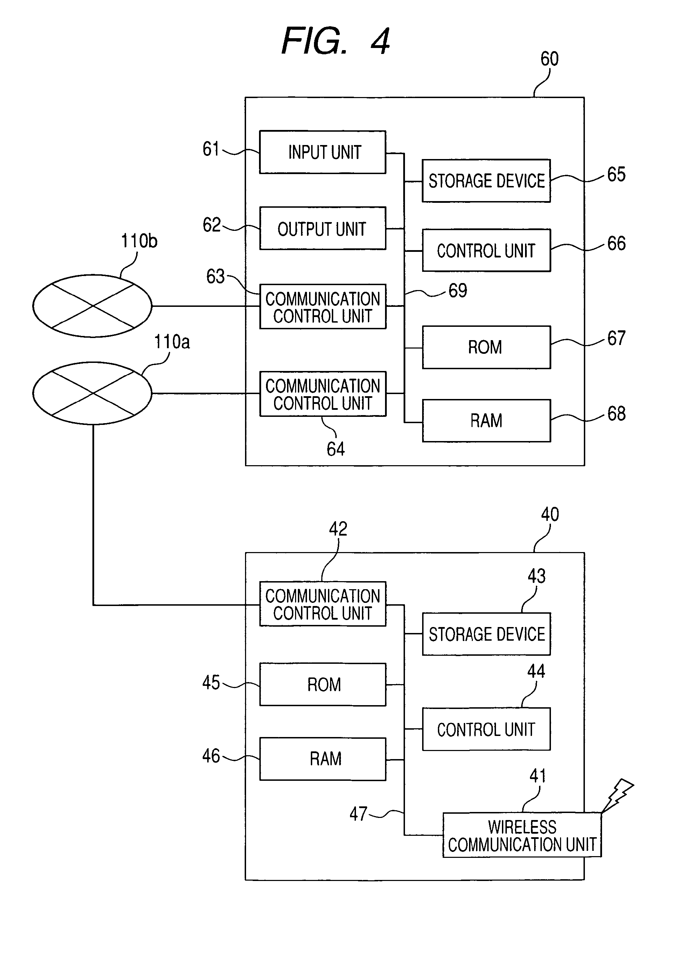

For applications using IP system communication, the DSRC-ASL processing unit 24 performs communication control by the PPP control protocol (PPPCP), the LAN control protocol (LANCP) and the TCP/IP. On the other hand, for applications using non-IP system communication, the DSRC-ASL processing unit 24 performs communication control by the extended communication control protocol (ASL-ELCP), the local port control protocol (LPCP) and the local port protocol (LPP). Specifically, the DSRC-ASL processing unit 24 performs communication control according to each identifier added to application data by each protocol. For example, in the case of transmitting data from an application using IP system communication to a wireless communication unit 41 of the roadside apparatus 40 to be described later (see FIG. 4), a port number, IP address, MAC address, access point identifier, EID and LID are sequentially added as identifiers to application data generated by the application, in accordance with each protocol, to generate packet frames. On the other hand, in the case where data is transmitted from the wireless communication unit 41 of the roadside apparatus 40 to the application, the DSRC-ASL processing unit 24 sequentially identifies an LID, EID, access point identifier, MAC address, IP address and port number included in packet frames in accordance with each protocol and can identify the application, which is the transmission destination of the data.

In the case of transmitting data from application using non-IP system communication to the wireless communication unit 41 of the roadside apparatus 40, a local port number, access point identifier, EID and LID are sequentially added as identifiers to application data generated by the application to generate packet frames. On the other hand, in the case where data is transmitted from the wireless communication unit 41 of the roadside apparatus 40 to the application using non-IP system communication, the DSRC-ASL processing unit 24 sequentially identifies an LID, EID, access point identifier and local port number included in packet frames in accordance with each protocol and can identify the application, which is the transmission destination of the data. A conventional ETC can be identified from an EID by other applications.

By the DSRC unit 21 configured as described above, the vehicle-mounted DSRC device 20 can communicate not only with conventional applications using non-IP system communication, such as ETC and EMV credit cards but also with applications using IP system communication to be used on the Internet and, thereby, it is possible to utilize more various services on the vehicle-mounted DSRC device 20.

The memory unit 25 is configured, for example, by a flash memory or the like and stores basic programs to be executed by the control unit 34. The memory unit 25 also temporarily stores a program or data being operated on when a CPU (not shown) executes operation processing.

The human machine interface unit 26 has a function of providing interfaces compatible with non-IP system communication and IP system communication. Specifically, the human machine interface unit 26 is mounted with an HTTP (Hyper Text Transfer Protocol) browser (for example, HTML 4.01, CSS1, CSS2 and the like) for handling DSRC application services used for IP system communication, a character codec (for example, JIS, UNICODE and the like), a speech codec (for example, TTS, MP3, and the like), an image codec (for example, JPEG, GIF and the like), and a video codec (for example, MPEG 4), and the like for handling DSRC application services used for IP system/non-IP system communication.

As shown in FIG. 3, the navigation unit 27 further has a navigation data processing unit 28, a human machine interface unit 29, a high precision positioning measurement unit 30, a map data unit 31, an operation unit 32 and a display unit 33, as main components. The navigation unit 27 has mainly a function as a car navigation system.

The navigation data processing unit 28 has an information provision control function and an information collection function. The information provision control function is a function of controlling information provision, including priority display, information provision judgment, information accumulation and the like to be compatible with non-IP system communication. The information collection function is a function of uplinking in-vehicle information held or accumulated by the navigation unit 27 through the DSRC unit 21, that is, a function of transmitting the information to the roadside apparatus 40. Since the human machine interface unit 29 has a function similar to that of the human machine interface unit 26 described above, description thereof will be omitted.

The high precision positioning measurement unit 30 is provided a GPS (global positioning system) receiver and a gyro sensor and has a function of performing positioning measurement with them to always grasp the position of a vehicle 100. The map data unit 31 has a function of providing map data of the current location matching the position of the vehicle 100 given by the high precision positioning measurement unit 30. The map data unit 31 can also provide map data capable of guiding to a destination. The map data held by the map data unit 31 is stored in the memory unit 25. The operation unit 32 has a function of enabling an operation with a button or a remote controller, a touch panel operation on a display screen of the display unit 33 and an operation in accordance with a speech instruction. The display unit 33 has a function of enabling screen display guidance and speech guidance using a speaker for DSRC application services. The control unit 34 has a function of performing operation/control of all processes included processes in the DSRC unit 21 and the navigation unit 27 described above, by the CPU (not shown) and the like.

Now, the roadside apparatus 40 as a base station and the information providing server 60 will be described with the use of FIG. 4. FIG. 4 is a block diagram showing the configurations of the roadside apparatus 40 and the information providing server 60 shown in FIG. 1.

The roadside apparatus 40 as a base station is a part which is responsible for the function for broadcasting contents information sequentially to the vehicle-mounted DSRC devices 20. The roadside apparatus 40 is provided with the wireless communication unit 41, a communication control unit 42, a storage device 43, a control unit 44, a ROM 45, a RAM 46 and a system bus 47.

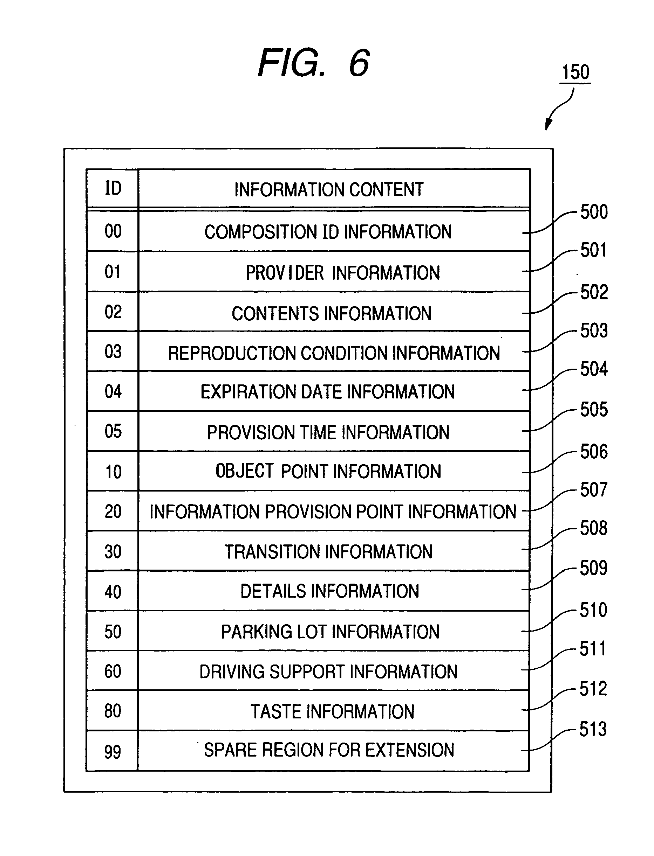

The wireless communication unit 41 is a part including the antenna 40b, and it exchanges information with the vehicle-mounted DSRC device 20 installed in a vehicle 100 passing near the roadside apparatus 40, by a wireless signal such as a radio wave signal and an optical signal. For example, the wireless communication unit 41 transmits digital data 150 (see FIG. 6; details will be described later), such as traffic information and advertisement, provided from the information providing server 60 to the vehicle-mounted DSRC device 20. The wireless communication unit 41 also receives information, such as a vehicle ID, transmitted from the vehicle-mounted DSRC device 20.

The communication control unit 42 is connected to the information providing server 60 via the ITS communication network 110a, and it receives the digital data 150, such as traffic information and advertisement, transmitted from the information providing server 60 and stores it into the storage device 43. The communication control unit 42 also transmits information acquired from the vehicle-mounted DSRC device 20 to the information providing server 60.

The storage device 43 stores the digital data 150, such as traffic information and advertisement, received from the information providing server 60. The control unit 44 is configured by a CPU or the like and controls the operation of the whole roadside apparatus 40. For example, the control unit 44 controls the wireless communication unit 41 to push-distribute the digital data 150 stored in the storage device 43 to the vehicle-mounted DSRC device 20. The control unit 44 stores the information acquired from the vehicle-mounted DSRC device 20 by the wireless communication unit 41 into the storage device 43. The control unit 44 can also generate traffic information around the roadside apparatus 40 using a traffic counter (not shown) or the like, store it into the storage device 43 and transmit it to the information providing server 60 via the ITS communication network 110a.

The ROM 45 stores an operating system (OS) required to control the operation of the whole roadside apparatus 40, programs and various data. The RAM 46 functions as a work area for the control unit 44. The system bus 47 is a transmission path for transferring commands and data among the units described above.

Next, the hardware configuration of the information providing server 60 and the operation of each unit will be described. The information providing server 60 is a server for distributing area information and advertisement information provided by service enterprisers, to the roadside apparatuses 40, and has an input unit 61, an output unit 62, first and second communication control units 63 and 64, a storage device 65, a control unit 66, a ROM 67, a RAM 68 and a system bus 69 as main components as shown in FIG. 4. The information providing server 60 in FIG. 1 is shown as one server for convenience. However, the number of the information providing server 60 is not limited to one. Multiple information providing server 60 may be provided.

The input unit 61 is provided with a keyboard, a mouse, an input interface and the like and has a function of inputting various data and instructions. The output unit 62 is configured by a display device or the like and has a function of displaying data, a message and the like.

The first communication control unit 63 has a function of communicating with an external apparatus via the general communication network 110b, such as a telephone line and the Internet, to acquire various information. The second communication control unit 64 is connected to one or multiple roadside apparatuses 40 via the ITS communication network 110a and has a function of transmitting traffic information to the roadside apparatuses 40. The second communication control unit 64 has a function of collecting information which roadside apparatuses 40 have acquired through communication with a vehicle-mounted DSRC devices 20 and the like, via the ITS communication network 100a which is a network exclusively for DSRC.

The storage device 65 is provided with a hard disk device and the like and has a function of storing various traffic information. The storage device 65 also has a function of storing the position, the address and the like of each roadside apparatus 40 as well as geographical information around it.

The control unit 66 is configured by a processor or the like and has a function of controlling the operation of the whole information providing server 60. The control unit 66 also has a function of creating information to be distributed to each roadside apparatus 40 from the neighborhood around the roadside apparatus 40, on the basis of various information stored in the storage device 65, and providing the information to the roadside apparatus 40 via the second communication control unit 64 and the ITS communication network 110a. The control unit 66 judges the communication environment provided for the vehicle-mounted DSRC device 20 and the communication environment provided for the roadside apparatus 40, selects a tool (contents) for admission or withdrawal to transmit a tool (contents) suitable for the communication environments to the vehicle-mounted DSRC device 20.

The ROM 67 has a function of storing an OS (operating system) required to control the operation of the whole information providing server 60 and various data. The RAM 68 has a function as a work area for the control unit 66. The system bus 69 has a function as a transmission path for transferring commands and data among the units described above.

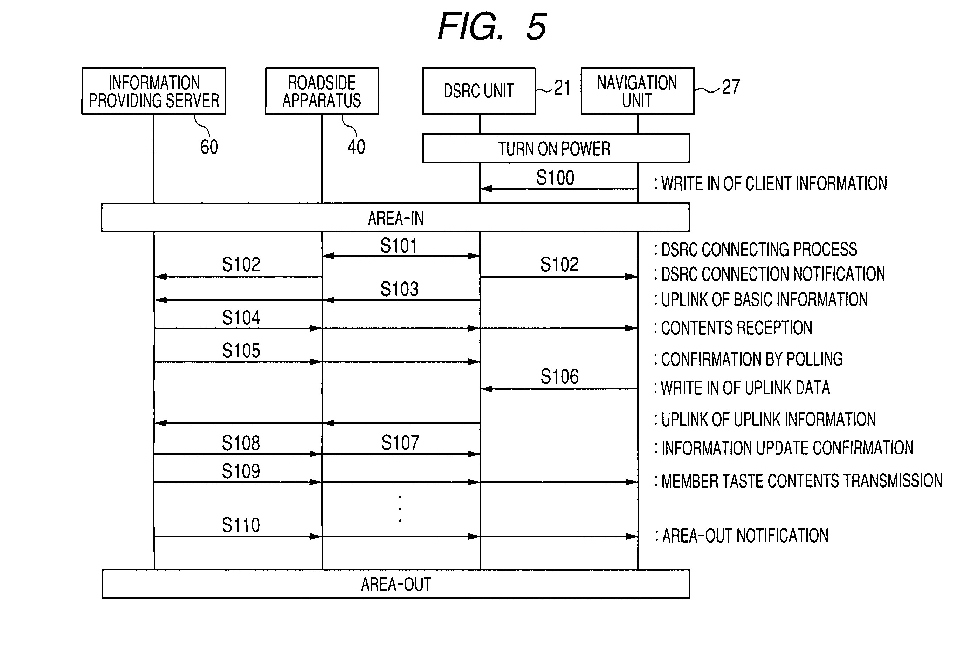

Next, a transaction conducted between the vehicle-mounted DSRC device 20 and the roadside apparatus 40 will be described with the use of FIG. 5. FIG. 5 is a diagram showing a transaction conducted between the vehicle-mounted DSRC device 20 and the roadside apparatus 40 shown in FIG. 1.

The transaction shown in FIG. 5 shows a communication process by each unit from when the vehicle-mounted DSRC device 20 is powered on until when the vehicle-mounted DSRC device 20 enters the communication area of the roadside apparatus 40 (hereafter, this entrance time point will be referred to as "area-in") and then moves out of the communication area (hereafter, this time point will be referred to as "area-out"). Each step will be described below.

Step S100: As for the navigation unit 27 and the DSRC unit 21, which are a part of the vehicle-mounted DSRC device 20, when the vehicle-mounted DSRC device 20 is powered on, client information data is written from the navigation unit 27 to the DSRC unit 21. Here, the client information data includes information about whether or not the vehicle-mounted DSRC device 20 can connect to the Internet, which is to be another communication network, and information such as the kind of contents which can be reproduced by the vehicle-mounted DSRC device 20 existing within the communication area and a contents reproduction application mounted on the vehicle-mounted DSRC device 20. The client information data also includes information about a language which the vehicle-mounted DSRC device 20 is compatible with, geodetic system information (Japanese or world geodetic system information) held by the navigation unit 27, compatible DRM (digital rights management), the resolution of the mounted display unit (display), the amount of data that can be accumulated, and the like.

Step S101: When a vehicle mounted with the vehicle-mounted DSRC device 20 performs "area-in", a DSRC connecting process (for example, an authentication process at a DSRC-SPF) is performed so that individual push-type distribution communication may be established between the roadside apparatus 40 and the vehicle-mounted DSRC device 20. Details of the DSRC connecting process will be omitted.

Step S102: When the DSRC connecting process is completed, the roadside apparatus 40 and the DSRC unit 21 give a DSRC connection notification to the information providing server 60 and the navigation unit 27, respectively.

Step S103: The DSRC unit 21 transmits (uplinks) the client information data written by the navigation unit 27 to the roadside apparatus 40. The roadside apparatus 40 can notify the client information data described above to the information providing server 60. This step S103 corresponds to a client information notification command specified in "JEITA TT-6002" and "JEITA TT-6003".

Step 104: By performing member identification by an ASL-ID, which is an ID for a common area for effectively processing multiple applications and analyzing function information held by the vehicle-mounted DSRC device 20, on the basis of the client information data notified at step S103, the information providing server 60 forms contents suitable for the vehicle-mounted DSRC device 20 in a multi-contents format and hands the contents over to the roadside apparatus 40. Since the information providing server 60 can know the contents which can be reproduced by the vehicle-mounted DSRC device 20 and the functions held by the vehicle-mounted DSRC device 20, from the client information data, it can form and distribute suitable contents. Since the information providing server 60 can also acquire an ID specific to the vehicle-mounted DSRC device 20 by using a vehicle-mounted device ID notification command or the like, it can identify the vehicle-mounted DSRC device 20. This specific ID may be used to perform member identification. Processes of invitation for admission, confirmation of admission and confirmation of withdrawal on the basis of the result of member identification will be described later. The ASL-ID may also be the ID specific to the vehicle-mounted DSRC device 20.

For example, in the information providing server 60 and/or the roadside apparatus 40, it is also possible to identify the vehicle 100 mounted with the vehicle-mounted DSRC device 20 by checking a held client DB or the like against the specific ID of the vehicle-mounted DSRC device 20. The roadside apparatus 40 distributes the received contents to the DSRC unit 21 of the vehicle-mounted DSRC device 20. The DSRC unit 21 distributes the contents to the navigation unit 27. The navigation unit 27 identifies a service enterpriser that has distributed the contents, from the data in the multi-contents format.

Details of the multi-contents format will be described later. By using this multi-contents format, individual push-type distribution suitable for individuals' hobbies, tastes and the like becomes possible even in DSRC communication for push-type-distribution. Contents provided in this multi-contents format are accumulated in the vehicle-mounted DSRC device 20 once and reproduced when a particular condition is satisfied. Therefore, though it is necessary to stay within the particular communication area to transmit/receive information via DSRC communication, it becomes possible to, by accumulating and storing received information, reproduce information outside the area. Furthermore, by setting the timing of reproducing contents such as area information and advertisement information, it becomes possible to distribute information to a user's needs.

Step S105: The information providing server 60 periodically performs polling to the vehicle-mounted DSRC device 20 via the roadside apparatus 40 after the process of step S104 in order to confirm whether information is written in an uplink tag area to be described later. In the case where it is confirmed by this polling that information is written in the uplink tag area, the information providing server 60 acquires the information. Otherwise, the information providing server 60 further continues polling.

S106: The navigation unit 27 identifies a service enterpriser from the contents received at step S104, and writes uplink data for the service enterpriser into a particular area (hereafter, referred to as an "uplink tag area") of the DSRC unit 21. However, if the uplink data for the service provide does not exist or if the service enterpriser is not a member, the navigation unit 27 does not write into the uplink tag area. The uplink tag area and the frame configuration of the uplink tag will be described later. After step S106, public information is distributed to the vehicle-mounted DSRC device 20 from the information providing server 60.

Step S107: If information is written into the uplink tag area at step S106, the DSRC unit 21 notifies (uplinks) the information to the roadside apparatus 40. Hereafter, the information sent by this process will be referred to as "uplink information". The roadside apparatus 40 hands the uplink information over to the information providing server 60.

Step S108: After the process of step S107, the information providing server 60 periodically performs polling to confirm whether information has been updated in the uplink tag area, via the roadside apparatus 40. In the case where it is confirmed by this polling that information in the uplink tag area has been updated, the information providing server 60 acquires the information. Otherwise, the information providing server 60 further continues polling.

Step S109: When acquiring the uplink information by step S107, the information providing server 60 forms contents suitable for the member's taste in the multi-contents format, on the basis of the information, and distributes the contents to the roadside apparatus 40 (hereafter, the process of this step will be referred to as "downlink"). The roadside apparatus 40 transmits the distributed contents to the DSRC unit 21. The DSRC unit 21 analyzes the distributed contents, and distributes them to the navigation unit 27 or accumulates them in the memory unit 25.

Step S110: When the distribution of the contents suitable for taste data ends, the information providing server 60 notifies the DSRC unit 21 to that effect to urge area-out to be performed. This is because, if one vehicle occupies the communication area for a long time, it becomes impossible to provide services to other members. This area-out urging notification may not be given.

Next, the multi-contents format exchanged in the transaction described above will be described. The multi-contents format makes up a compound format configured for each ID in order to handle various DSRC application services in one data format. It is also a data format capable of configuring distributed contents only with necessary items (IDs) according to purposes. Therefore, the multi-contents format is capable of suppressing the amount of distributed data and reducing network traffic. Data in the multi-contents format is configured by digital data.

A conventional vehicle-mounted ITS device reproduces data in order of distribution in response to distribution from the roadside apparatus 40 within a communication area. However, this multi-contents format makes it possible to reproduce contents at a particular place in conjunction with a car navigation function and to guide to a particular place, in addition to reproduce data in order of distribution after receipt the data. Furthermore, since this multi-contents format is on the assumption that data is accumulated in the vehicle-mounted DSRC device 20 which has received distribution, it is possible to utilize the distributed data even outside the communication area of the roadside apparatus 40.

Furthermore, since the vehicle-mounted DSRC device 20 can operate in consideration of a data distribution source, it is also useful for prevention of spam. The multi-contents format has a function of uplink from the vehicle-mounted DSRC device 20 to the information providing server 60. It is also possible to collect information about a destination and stop-offs set in the vehicle-mounted DSRC device 20 as well as activity history and history of viewing distributed contents.

FIG. 6 is a diagram showing a configuration example of the digital data 150 which is data of a part of the multi-contents format transmitted and received in the transaction shown in FIG. 5. By utilizing the data configuration of this multi-contents format, various operations of distributed contents can be specified. Furthermore, since the distributed contents are constituted by contents attached with multiple IDs, the configuration can be changed for each operation of contents. Each of representative IDs shown in FIG. 6 will be described.

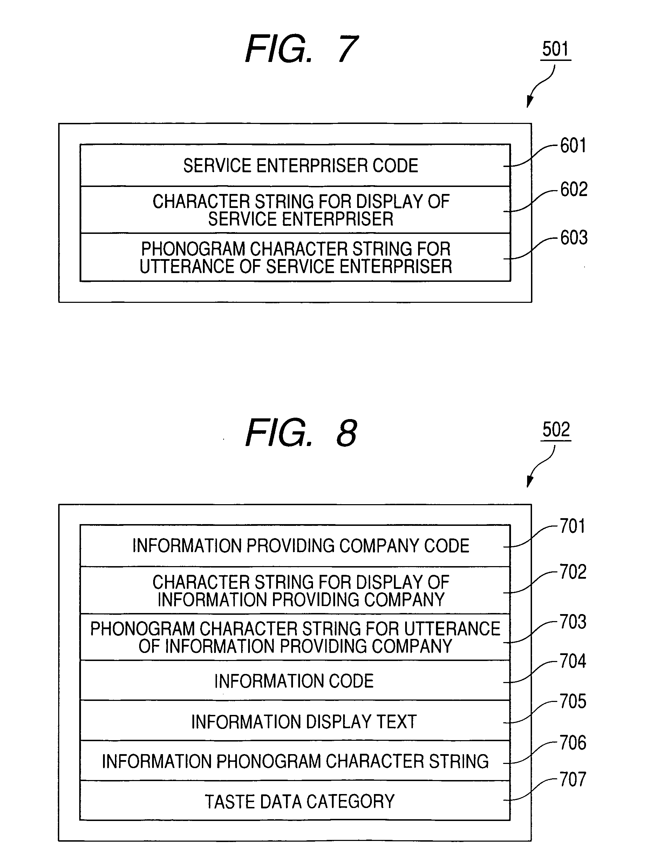

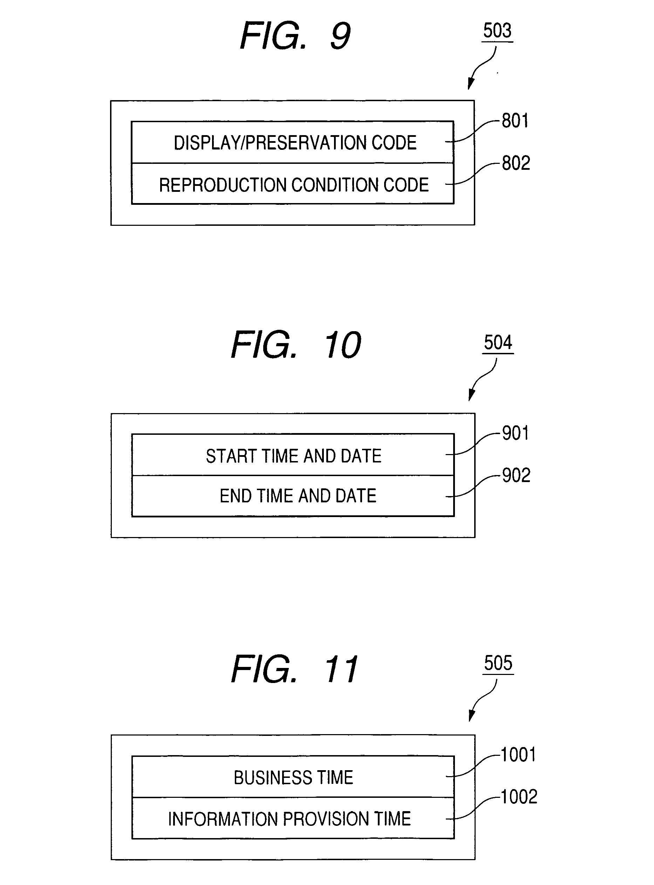

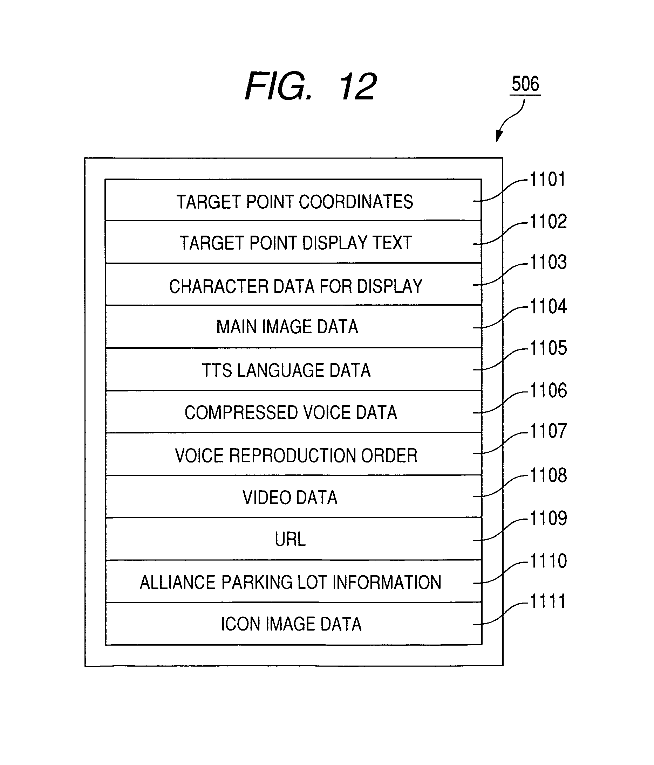

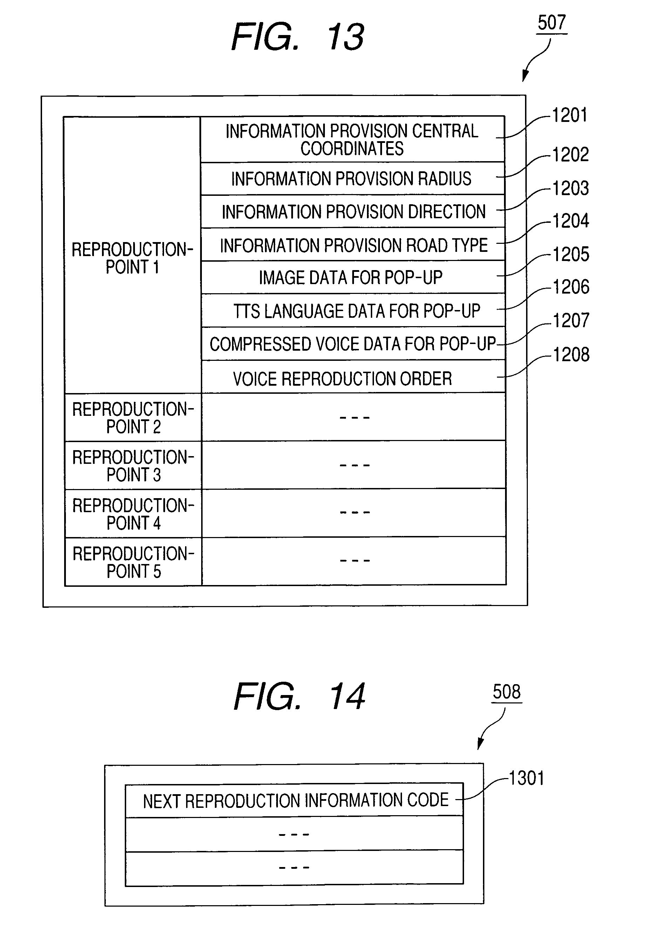

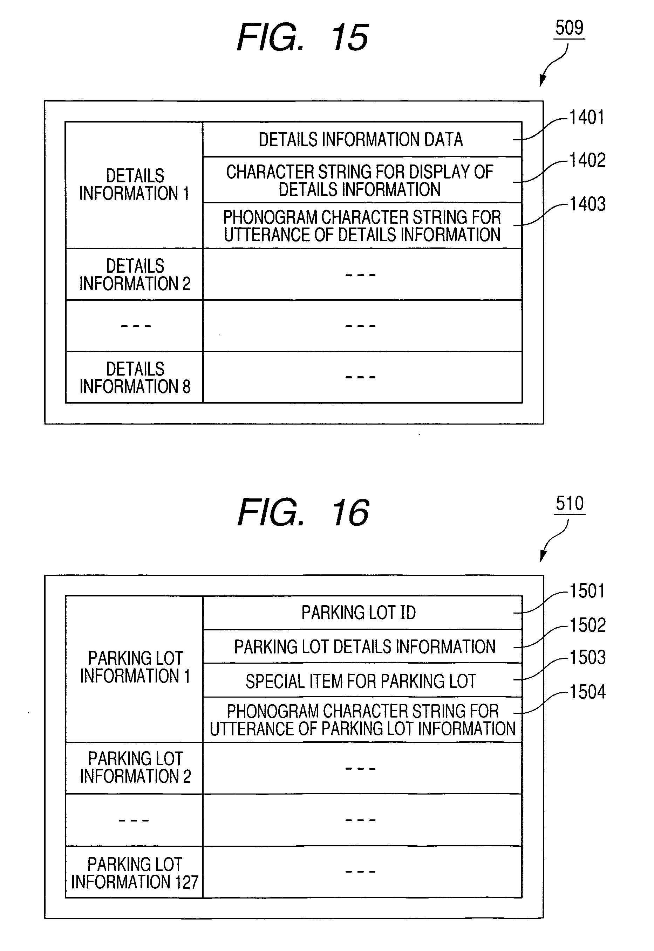

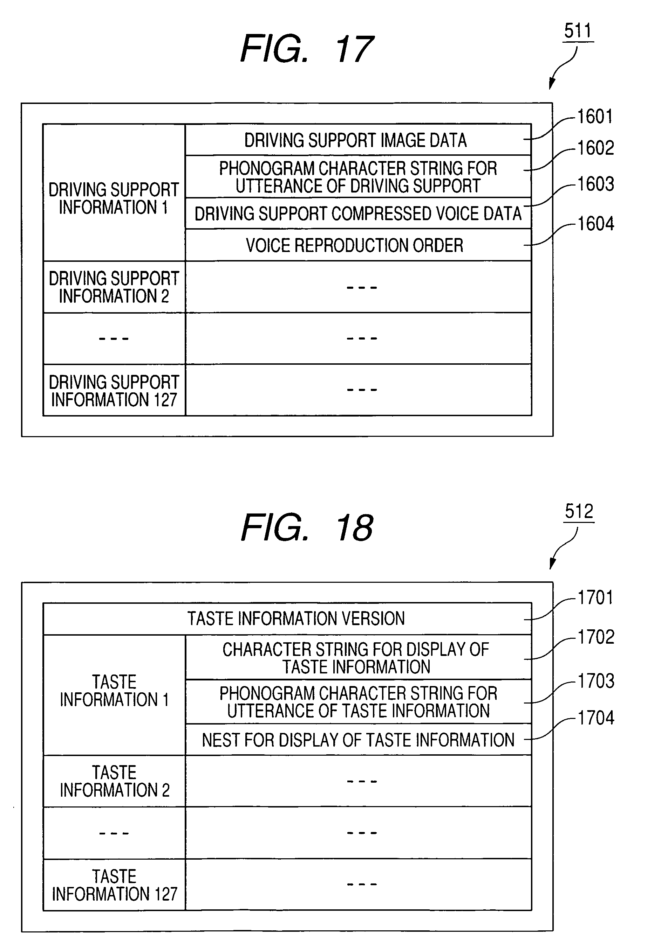

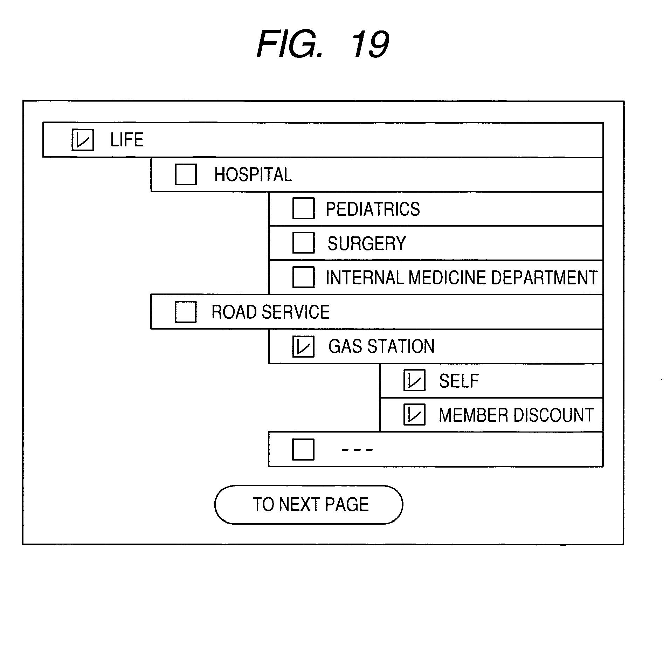

As shown in FIG. 6, the digital data 150 includes the items of: composition ID information 500, enterpriser information 501 (see FIG. 7 for details), contents information 502 (see FIG. 8 for details), reproduction condition information 503 (see FIG. 9 for details), expiration date information 504 (see FIG. 10 for details), provision time information 505 (see FIG. 11 for details), target point information 506 (see FIG. 12 for details), information provision point information 507 (see FIG. 13 for details), transition information 508 (see FIG. 14 for details), details information 509 (see FIG. 15 for details), parking lot information 510 (see FIG. 16 for details), driving support information 511 (see FIG. 17 for details), taste information 512 (see FIG. 18 for details), the composition ID information 500 (see FIG. 19 for details) and spare region for extension 513. A specific ID is assigned in advance to each item. One digital data 150 can be referred to as one "information group" which stores a part or all of the information.

One digital data 150 includes a part or all of the items described above. That is, distributed digital data 150 may not necessarily include all the items described above. It may be configured to include any of the items described above according to the purpose of using the digital data 150. For example, if the contents of the digital data 150 are advertisement for a store, and the store has a parking lot or there is an available parking lot nearby, it is desirable that the digital data 150 includes the parking lot information 510. However, if the parking lot information 510 is in-parking-lot speed guidance and the like unrelated to the store, it is not necessary to include the parking lot information 510. The providing side (the creation side) of the digital data 150 can create the digital data 150 in consideration of what information should be included for which item according to the purpose of using the digital data 150.

Next, information content to be included for each item will be described in detail.

First, details of the composition ID information 500 will be described. The composition ID information 500 is information showing whether or not each of the items of the enterpriser information 501, the contents information 502, the reproduction condition information 503, the expiration date information 504, the provision time information 505, the target point information 506, the information provision point information 507, the transition information 508, the details information 509, the parking lot information 510, the driving support information 511 and the taste information 512 is stored in the digital data 150.

In this embodiment, the ID assigned in advance to each item is expressed by a 2-byte numerical value. In the composition ID information 500, IDs corresponding to the items included in the digital data 150 are stored being arranged in ascending order of the numerical values.

For example, if "010203040510" is stored in the composition ID information 500, it means that the enterpriser information 501 (ID=01), the contents information 502 (ID=02), the reproduction condition information 503 (ID=03), the expiration date information 504 (ID=04), the provision time information 505 (ID=05) and the target point information 506 (ID=10) are stored in this digital data 150.

The format of data to be stored in the composition ID information 500 is not limited to this method. For example, a format is also possible in which one bit is assigned to each of the twelve items or the thirteenth items added with the spare region for extension 513 to be described later, a corresponding bit is set to "1" in the case of data being stored, and a corresponding bit is set to "0" in the case of data not being stored.

Next, the enterpriser information 501 will be described. FIG. 7 is a diagram showing the details of information stored in the enterpriser information 501. The enterpriser information 501 has a service enterpriser code 601, a character string for display of service enterpriser 602 and a phonogram character string for utterance of service enterpriser 603.

The service enterpriser code 601 is information for identifying a service enterpriser related to the digital data and is information which must be necessarily stored. Typically, an agency managing the operation of DSRC uniquely assigns a service enterpriser code to each service enterpriser. The service enterpriser stated here is an enterpriser that performs a series of services for distributing digital contents which the enterpriser was entrusted with by an advertiser or the like and created, to contractor users via DSRC. This service enterpriser code 601 is stored in all the digital data 150.

The vehicle-mounted DSRC device 20 side can use the service enterpriser code 601 for so-called spam countermeasures. Specifically, in the case where the transceiver unit/modulation & demodulation unit 22 receives digital data 150 attached with an unauthorized service enterpriser code 601, digital data 150 which is not attached with a service enterpriser code 601 or digital data 150 attached with a service enterpriser code 601 corresponding to a service enterpriser that the user is not under contract with, the DSRC control unit 23 may discard the received digital data 150 or store it into a predetermined junk data storage area (not shown) in the memory unit 25.

The vehicle-mounted DSRC device 20 side may transmit (or may not transmit) a response to received digital data 150 depending on whether or not a predetermined service enterpriser code 601 is attached to the received digital data 150. Specifically, information indicating a service enterpriser code 601 assigned to a service enterpriser that the user makes a contract with in advance is stored in the memory unit 25 of the vehicle-mounted DSRC device 20. When the transceiver unit/modulation & demodulation unit 22 receives digital data 150 attached with the same service enterpriser code 601 as the service enterpriser code 601 indicated by the stored information, the DSRC control unit 23 may cause the transceiver unit/modulation & demodulation 22 to transmit predetermined uplink information to the roadside apparatus 40 as a response indicating that the digital data 150 has been normally received.

The character string for display of service enterpriser 602 is text data used to display a service enterpriser name on the monitor to notify it to a user. It is desirable that the number of characters is within such a range that the characters can be displayed on one line without line feed when they are displayed on the monitor (for example, about 20 double-byte characters).

The phonogram character string for utterance of service enterpriser 603 is speech data used to output a service enterpriser name to a speaker by speech to notify it to the user. The phonogram character string for utterance of service enterpriser 603 is created in a predetermined format for speech synthesis using a TTS (text-to-speech) system known to the public, and includes, for example, information specifying vowels, consonants, phonetic symbols, intonation, rising and falling of tones and the like.

Next, details of the contents information 502 will be described with the use of FIG. 8.

An information providing company code 701 is a code indicating a source (sponsor) providing digital contents configured by one or more digital data 150. Typically, the information providing company code 701 is assigned in advance to each information providing company by a service enterpriser. For example, the control unit 34 of the vehicle-mounted DSRC device 20 can perform search, rearrangement, deletion or the like of data desired by the user, using the information providing company code 701 included in received digital data 150. The unit to which the information providing company code 701 is assigned is not limited to a "company". The unit may be any group, corporation or individual that provides digital contents.

A character string for display of information providing company 702 is text data used to display a digital contents provision source on the monitor to notify it to the user. It is desirable that the number of characters is within such a range that the characters can be displayed on one line without line feed when they are displayed on the monitor.

A phonogram character string for utterance of information providing company 703 is speech data used to output a digital contents provision source to a speaker by speech to notify it to the user. The phonogram character string for utterance of information providing company 703 is created in a predetermined format for performing speech synthesis using a TTS system, similarly to the phonogram character string for utterance of service enterpriser 603.

An information code 704 is an identification code uniquely assigned to each distributed digital data 150 by a service enterpriser. The identification code is expressed, for example, with numerals, characters, symbols and the like. It is desirable that, when information content is updated within such a range that the updated content can be identified with that before the update, the same identification code is assigned to the digital data 150 before and after the update. In this case, it is possible to store version information about the digital data 150 into the spare region for extension 513 or the details information 509, attach the same information code 704 to the digital data 150 before and after the update and attach different version numbers to the digital data 150 before and after the update.

On the basis of the information code 704 (identification code) of received digital data 150, the control unit 34 determines a memory area for storing the digital data 150. Specifically, the control unit 34 reads a service enterpriser code 601 and an information code 704 (identification code) from the received digital data 150 and checks whether or not digital data 150 corresponding to them is stored in the memory unit 25. As a result, if the appropriate digital data 150 is stored (that is, if digital data 150 to which the same identification code is assigned by the same service enterpriser exists), the control unit 34 stores the newly received digital data 150 into the same memory area (that is, overwrites the data). On the other hand, if the appropriate digital data 150 is not stored, the control unit 34 stores the newly received digital data 150 into a different memory area in the memory unit 25.

Information display text 705 is text data used to display a digital contents name on the monitor to notify it to the user. It is desirable that the number of characters in the text is within such a range that the characters can be displayed on one line without line feed when they are displayed on the monitor. Typically, the information display text 705 is the title of digital data 150. By reading the information display text 705 displayed on the monitor, the user can instruct the vehicle-mounted DSRC device 20 to perform search, rearrangement, storage, deletion or the like of desired digital data 150.

An information phonogram character string 706 is speech data used to output a digital contents name to a speaker by speech to notify it to the user. The information phonogram character string 706 is created in a predetermined format for performing speech synthesis using a TTS system, similarly to the phonogram character string for utterance of information providing company 703.

Taste data categories 707 are information used to categorize the digital data 150 in a predetermined categorization method. In this embodiment, one digital data 150 can be categorized into multiple categories. For example, in the case where digital contents are advertisement for "a Japanese restaurant where takeout is available", the digital data 150 constituting the digital contents may be categorized into multiple categories, such as a first category "restaurant" and a second category "takeout". A tree structure categorization is also possible in which there are, for example, a higher main category "restaurant" and a lower subordinate category "Japanese cuisine". In this embodiment, the taste data categories 707 correspond to a 96-bit data area. One bit corresponds to one category, and 96 kinds of categories can be obtained by setting ON/OFF of each bit. However, this number of categories is only an example, and it goes without saying that any number of categories can be set.

For example, the control unit 34 can perform search, rearrangement, deletion or the like of data desired by the user, using the taste data categories 707 included in received digital data 150. For example, the control unit 34 can compare the taste data categories 707 of the digital data 150 stored in the memory unit 25 and taste data set by a user (data indicating the user's tastes) and delete digital data 150 categorized in categories that do not correspond to the user's tastes, from the memory unit 25.

Next, details of the reproduction condition information 503 will be described with the use of FIG. 9. The reproduction condition information 503 has a display/preservation code 801 and a reproduction condition code 802.

The display/preservation code 801 is information indicating which method of a pattern A and a pattern B described below the vehicle-mounted DSRC device 20 should adopt to handle received digital data 150.

In the "pattern A", the digital data 150 is stored in the memory unit 25 as digital contents which the user can use even outside a DSRC communication area (an accumulation type). In the "pattern B", the digital data 150 is reproduced immediately after reception (an immediate display type).

In the case of adopting the pattern A, the control unit 34 stores received digital data 150 into the memory unit 25 without reproducing it, and reproduces it when the user instructs start of reproduction. However, in the case of adopting the pattern B also, the digital data 150 may be stored into the memory unit 25 after reproduction.

The reproduction condition code 802 is information specifying a behavior in the case where, because the vehicle-mounted DSRC device 20 is performing road guidance by the car navigation system or the like within an information provision area specified by the information provision point information 507 of received digital data 150, the digital data 150 cannot be reproduced (or it is not appropriate to reproduce the digital data 150). For example, a flag is stored which indicates a behavior in the case where, when digital data 150 is received, a road guidance screen and speech by the car navigation system are being reproduced, or the timing is not appropriate for reproducing the digital data 150 because of running immediately near an intersection. The reproduction condition code 802 specifies whether or not to reproduce the digital data 150 when the digital data 150 cannot be reproduced for the reason that road guidance by the car navigation system and the like is being performed within an information provision area for which the center and the radius are specified by the information provision point information 507, that is, in the case of already having exited the information provision area (communication area) when the road guidance ends.

Next, details of the expiration date information 504 will be described with the use of FIG. 10. The expiration date information 504 has a start time and date 901 and an end time and date 902.

The "expiration date" refers to a period during which the vehicle-mounted DSRC device 20 is allowed to reproduce the digital data 150. For example, the control unit 34 can cause expired digital data 150 not to be reproduced even if it is stored in the memory unit 25. However, the control unit 34 may reproduce the digital data 150 irrespective of a set expiration date.

The start time and date 901 is the start time and date of the expiration date of the digital data 150. The end time and date 902 is the end time and date of the expiration date of the digital data 150. For example, the start time and date 901 and the end time and date 902 are set in a year-month-day-hour-minute-second format. The valid period of the digital data 150 is the period from the time and date specified by the start time and date 901 until the time and date specified by the end time and date 902. That is, the user can view digital contents only within this valid period. The control unit 34 may reproduce the digital data 150 if the current time and date is within the valid period, but it does not reproduce it if the current time and date is beyond the valid period. As described later, the control unit 34 reproduces the digital data 150 if the current time is within the valid period of the digital data 150, and a reproduction start condition determined in advance is satisfied.

Among digital contents, there may be such digital contents that, when the vehicle-mounted DSRC device 20 receives the digital contents once, can be viewed by the user without an expiration date being especially specified. In this case, a null value or a predetermined value indicating that an expiration date is not specified is set in advance in the data areas of the start time and date 901 and the end time and date 902.

The control unit 34 checks the expiration date information 504 about the digital data 150 stored in the memory unit 25. Then, it is desirable that, when the current time and date exceeds the valid period, in other words, when the current time and date is beyond the valid period and after the end time and date, the control unit 34 deletes this digital data 150. However, it is desirable that, when the current time and date is beyond the valid period and before the start time and date, the control unit 34 does not delete this digital data 150.

Next, details of the provision time information 505 will be described with the use of FIG. 10.

Business time 1001 is information indicating a time zone during which, when a provision source indicated by the information providing company code 701 is a store or the like for which business time is specified in advance, the store or the like is open and can provide services for the user.

In this embodiment, the business time 1001 is managed with "one" hour as the unit, for each day of the week. For example, one bit is assigned to each of time zones, such as 0:00 to 0:59 and 1:00 to 1:59, for each day of the week, and whether the time zone is within or beyond the business time is expressed by ON/OFF of the bit. Each time zone may be arbitrarily determined. A bit may be assigned to each of time zones separated at intervals of 15 minutes, 30 minutes or the like. The business time 1001 may be, for example, in a form in which business start time and business end time are described in an hour-minute-second format, similarly to the start time and date 901 and the end time and date 902 in the expiration date information 504 described above.

When the control unit 34 judges that a reproduction start condition defined for each digital data 150 is satisfied, and the current time and date is included among the time and dates specified by the business time 1001, the control unit 34, for example, reproduces and pop-up displays image data for pop-up 1205 stored in information provision point information 507 to be described later. Otherwise, the control unit 34 does not reproduce (does not pop-up display) it. It is also possible to, when a reproduction instruction is given by the user, and the current time and date is included among the time and dates specified by the business time 1001, reproduce and display main image data 1104 stored in the target point information 506 to be described later and not to reproduce (not to display) it. The main image data 1104 may be reproduced even when the current time and date is not included among the time and dates specified by the business time 1001.

Information provision time 1002 is information indicating a time zone during which the digital data 150 may be reproduced. The information provision time 1002 is set when digital contents include, for example, information which its provision source desires to provide only in the morning or only at lunchtime. In this embodiment, similarly to the business time 1001, the information provision time 1002 is managed with "one" hour as the unit for each day of the week; one bit is assigned to each time zone; and whether the time zone is within or beyond the providing hours is expressed by ON/OFF of the bit.

For example, an advertiser has a service enterpriser distribute digital contents constituted by first digital data in which a first time zone (such as lunch time) is set for the information provision time 1002 and second digital data in which a second time zone (such as dinner time) is set for the information provision time 1002. The control unit 34 of the vehicle-mounted DSRC device 20 which receives the digital contents reproduces data included in the information provision point information 507 of the first digital data if the current time is included in the first time zone, and reproduces data included the information provision point information 507 of the second digital data if the current time is included in the second time zone. Thereby, the vehicle-mounted DSRC device 20 can successively presume which is information suitable for the current time and date and provide the information to the user.

Next, details of the target point information 506 will be described with the use of FIG. 12.

The "target point" is typically a predetermined place where a provider that provides commodities/services for users but is not the service enterpriser specified in the enterpriser information 501 (hereafter referred to as a "shop") provides commodities/services for users. When the shop has premises, the "target point" refers to the place of the premises. However, any point can be set as the target point.

Target point coordinates 1101 are information indicating the place of a shop by a latitude and longitude. The target point coordinates 1101 also includes a geodetic system identifying flag specifying which of the Japanese geodetic system and the world geodetic system is used to express the latitude and longitude. When reproducing digital data 150 for which a latitude and longitude are set in the target point coordinates 1101, the control unit 34 can cause the display unit 33 to display a button or the like for setting the position indicated by the target point coordinates 1101 as a destination or a stopover of car navigation on the monitor so that this position can be set as the destination or the stopover according to an instruction input from a user. For example, the icon image described above is displayed at the position on a map specified by the target point coordinates 1101.

The target point information 506 includes character data, image data and speech data. The character data includes target point display text 1102 and character data for display 1103. The image data includes main image data 1104 and icon image data 1111 as still image data, and video data 1108 as a time-varying image. The speech data includes TTS language data 1105 and compressed voice data 1106. Still images which can be included in the target point information 506 are main images to be reproduced when an instruction to start reproduction is given by the user, and icon images which are conveniently displayed on a navigation screen together with a map and the like irrespective of an instruction to start reproduction by the user.

The target point display text 1102 is text data used to display a shop name on the monitor to notify it to the user. It is desirable that the number of characters of the text is within such a range that the characters can be displayed on one line without line feed when they are displayed on the monitor.

The character data for display 1103 is text data used to display supplementary explanation and the like about a shop on the monitor to notify it to the user. The number of characters in the text is assumed to have about 1,000 double-byte characters at a maximum. When causing the view of the digital data 150 to be displayed on the monitor, the control unit 34 causes about 120 characters from the top of the data to be displayed as the first page and sequentially causes characters to be displayed as the second page, the third page... by performing paging and scrolling.

The main image data 1104 is the data body of a main image created in a predetermined image format and with a predetermined image size and the predetermined number of colors. The image format includes JPEG (Joint Photographic Experts Group), GIF (Graphics Interchange Format), PNG (Portable Network Graphics), bitmap and the like. When an operation unit 204 accepts an instruction to start reproduction from the user, the control unit 34 reads the main image data 1104 and causes the display unit 33 to display it on the monitor. The position of displaying the main image is arbitrary. This image data 1104 includes an image format identifying flag, which is information specifying the format of the main image.

The TTS language data 1105 is the data body of speech for utterance, which is created in the TTS format. This TTS language data 1105 includes a language identifying flag and a speech format identifying flag. The language identifying flag is a flag for distinguishing among Japanese, English and the like. The speech identifying flag is a flag for distinguishing among a Japanese phonogram character string, a foreign-language phonogram character string and the like.

The compressed voice data 1106 is the data body of speech created in a predetermined compression format. The compression format includes IMA-ADPCM (Interactive Multimedia Association Adaptive Differential Pulse Code Modulation), MP3 (Moving Picture Experts Group Audio Layer-3), AAC (Advanced Audio Coding), CELP (Code Excited Linear Prediction), PCM (Pulse Code Modulation) and the like. This compressed voice data 1106 includes a compression speech format identifying flag, which is information specifying the format of the compressed voice data 1106.

Voice reproduction order 1107 is information specifying which order the data are to be reproduced in, in the case where both of the TTS language data 1105 and the compressed voice data 1106 are included in the target point information 506 as speech data. For example, a flag value "0" indicating that the compressed voice data 1106 is to be reproduced first, and then the TTS language data 1105 is to be reproduced, or a flag value "1" indicating that the TTS language data 1105 is to be reproduced first, and then the compressed voice data 1106 is to be reproduced is set for the voice reproduction order 1107. For example, if the speech of lines and the voice of a so-called sound logo are stored in the TTS language data 1105 and the compressed voice data 1106, respectively, and the flag value "0" is set for the voice reproduction order 1107, then the sound logo is reproduced first, and then the lines are heard.

The video data 1108 is the data body of a time-varying image created in a predetermined compression format. The compression format includes MPEG4 (Moving Picture Experts Group Layer-4) or the like. This video data 1108 includes a video format identifying flag, which is information specifying the format of the video data 1108.

The character data for display 1103, the main image data 1104, the TTS language data 1105, the compressed voice data 1106, the video data 1108 may be collectively referred to as "main contents data".

A URL (uniform resource locator) 1109 stores a descriptor specifying a webpage on the Internet. Typically, it is a descriptor specifying a webpage opened by a shop, but the destination specified (linked) by the descriptor is not limited. In the case of reproducing digital data 150 for which the URL 1109 is set, the control unit 34 causes a button for jumping the page to a link destination set for the URL 1109 and can jump the page according to a request by the user.

Alliance parking lot information 1110 is information about a parking lot with which a shop ties up, and it is expressed with a parking lot ID 1501 in the parking lot information 510 to be described later. For example, if there is a parking lot with which a shop ties up, the parking lot ID 1501 specific to the parking lot is stored in the alliance parking lot information 1110.

Icon image data 1111 is the data body of an icon image created in a predetermined image format and with a predetermined image size and the predetermined number of colors. Images indicating map symbols, traffic signs and the like are stored in the memory unit 25 of a vehicle-mounted DSRC device 20 in advance. However, when a shop wants to its own icon images on the navigation screen or the like, the icon image data 1111 can be stored in digital data 150 and distributed.

When two or more of the target point display text 1102, the main image data 1104, the TTS language data 1105 (or the compressed voice data 1106) and the video data 1108 are included in the target point information 506, it is desirable that the control unit 34 starts reproduction of these data at the same timing.

Next, details of the information provision point information 507 will be described with the use of FIG. 13.

The information provision point information 507 includes image data and speech data for reproduction, similarly to the target point information 506. The image data and speech data stored in the target point information 506 are reproduced mainly when a user's instruction to start reproduction is given. In contrast, the image data and speech data stored in the information provision point information 507 are reproduced mainly when a vehicle-mounted DSRC device 20 reaches a reproduction-point.

The reproduction-point is a place where reproduction of the speech data and image data stored in the information provision point information 507 is to be started. For example, when a vehicle-mounted DSRC device 20 receives digital data in which still image data is stored, and a vehicle 100 mounted with this vehicle-mounted DSRC device 20 reaches a reproduction-point, the still image data is pop-up displayed on the display unit 33 of the vehicle-mounted DSRC device 20. In other words, the still image data is not pop-up displayed unless the vehicle 100 reaches a reproduction-point. However, if the still image data cannot be reproduced for some reason even though the vehicle 100 reaches a reproduction-point, it can be reproduced when a user's reproduction instruction is given.

In this embodiment, up to five places can be specified as reproduction-points. However, it goes without saying that it is also possible to adopt an embodiment in which four or less or six or more places can be specified.

A reproduction-point is indicated by a latitude and longitude. Not only can one point corresponding to a latitude and longitude be specified as the reproduction-point with pinpoint accuracy but also an area with some space (hereafter referred to as an "information provision area" or a "communication area") can be specified. In this embodiment, the reproduction-point can be assumed to be within an information provision area included in a circle with a point specified by a latitude and longitude as the center and with a radius of a predetermined distance. That is, when the vehicle 100 mounted with the vehicle-mounted DSRC device 20 enters somewhere in this information provision area, digital data 150 is reproduced. The shape of the information provision area is not limited to a circle. An area surrounded by an arbitrary figure, such as an oval and a quadrangle, is also possible.

Information provision central coordinates 1201 are the central coordinates of the information provision area and is indicated with a latitude and longitude. The information provision central coordinates 1201 also includes a geodetic system identifying flag specifying which of the Japanese geodetic system and the world geodetic system is to be used to express the latitude and longitude, similarly to the target point coordinates 1101. An information provision radius 1202 is the radius of the circle specifying the information provision area and is indicated with meters as the unit. One information provision area is determined by one set of information provision central coordinates 1201 and information provision radius 1202.

When digital data 150 includes the information provision central coordinates 1201 and does not include the information provision radius 1202, the reproduction-point is a point specified by the information provision central coordinates 1201. When the vehicle 100 mounted with the vehicle-mounted DSRC device 20 passes through this point, the digital data 150 is reproduced.

Information provision direction 1203 is indicated with a latitude and longitude or with a general direction, for example, such as the north, south, east and west and the sixteen directions. Digital data 150 for which the information provision direction 1203 is set is reproduced when a vehicle-mounted DSRC device 20 is moving in a direction indicated by the information provision direction 1203 from a reproduction-point. That is, when the vehicle-mounted DSRC device 20 is moving in a direction which is not indicated by the information provision direction 1203 from a reproduction-point, the digital data 150 is not reproduced. However, it is desirable that a reaction angle of about 22.5 degrees on both of the right and left is set, and, assuming that the traveling direction of the vehicle and the direction indicated by the information provision direction 1203 agree with each other if the difference between both directions is within the reaction angle, the digital data 150 is reproduced.

The control unit 34 can determine the traveling direction of the vehicle using a direction sensor in a group of sensors (not shown). The control unit 34 can also determine the traveling direction of the vehicle from a directional vector connecting the position of the vehicle at certain time T1 and the position of the vehicle at different time T2 even if the direction sensor is not provided.

An information provision road type 1204 is information indicating the type of a road, such as general road, expressway and one-way traffic. Digital data 150 for which the information provision road type 1204 is set is reproduced when a vehicle-mounted DSRC device 20 passes the road indicated by the information provision road type 1204. That is, even if the vehicle-mounted DSRC device 20 reaches a reproduction-point, the digital data 150 is not reproduced if the vehicle passes through a road which is not the road indicated by the information provision road type 1204.

A reproduction start condition for digital data 150 is set by any one of the information provision central coordinates 1201, the information provision radius 1202, the information provision direction 1203 and the information provision road type 1204 or a combination of two or more of these. A shop (or a service enterpriser) can freely set the reproduction start condition. For example, when the information provision central coordinates 1201, the information provision radius 1202 and the information provision direction 1203 are set, the reproduction start condition is to satisfy all of these conditions (logical product; AND). For example, if the information provision central coordinates 1201 and the information provision radius 1202 are set, and the information provision direction 1203 is not set, then the reproduction start condition is to satisfy the two conditions of the information provision central coordinates 1201 and the information provision radius 1202 (AND). That is, the control unit 34 takes the logical product of set conditions, among the information provision central coordinates 1201, the information provision radius 1202, the information provision direction 1203 and the information provision road type 1204, and sets it as the reproduction start condition.

The image data for pop-up 1205 is the data body of an image created in a predetermined image format and with a predetermined image size and the predetermined number of colors. The image format includes JPEG, GIF, PNG, bitmap and the like. The image size is typically smaller than that of the main image data 1104. When judging that a predetermined reproduction start condition is satisfied, the control unit 34 reads the image data for pop-up 1205 and displays it on the display unit 33. Though the display position of the image is arbitrary, it is typically almost the center of the screen. The image data for pop-up 1205 includes an image format identifying flag, which is information specifying the format of the image, similarly to the main image data 1104.

TTS language data for pop-up 1206 is the data body of speech for utterance created in the TTS format. The TTS language data for pop-up 1206 includes a language identifying flag and a speech format identifying flag, similarly to the TTS language data 1105.

Compressed voice data for pop-up 1207 is the data body of speech created in a predetermined compression format. The compression format includes IMA-ADPCM, MP3, AAC, CELP PCM and the like. The compressed voice data for pop-up 1207 includes a compression speech format identifying flag, which is information specifying the format of the compressed voice data for pop-up 1207, similarly to the compressed voice data 1106. The image data for pop-up 1205, the TTS language data for pop-up 1206 and the compressed voice data for pop-up 1207 may be collectively referred to as "contents data for pop-up".

voice reproduction order 1208 is information specifying which order the data are to be reproduced in, in the case where both of the TTS language data for pop-up 1206 and the compressed voice data for pop-up 1207 are included in the information provision point information 507 as speech data, similarly to the voice reproduction order 1107.

One combination set (reproduction-point data) of the information provision central coordinates 1201, the information provision radius 1202, the information provision direction 1203, the information provision road type 1204, the image data for pop-up 1205, the TTS language data for pop-up 1206, the compressed voice data for pop-up 1207 and the voice reproduction order 1208 is associated with one reproduction-point. As described above, in this embodiment, up to five reproduction-points can be set for one digital data 150, and the reproduction-point data can be stored for each reproduction-point.

It is possible to have a user view different digital contents without troubling the user, for example, such as giving parking lot guidance for an up-route and parking lot guidance for a down-route in the case of accessing a certain place of a shop via the up-route and in the case of accessing the certain place of the shop via the down-route, respectively.

It is desirable that, when the information provision point information 507 includes both of the image data for pop-up 1205 and the TTS language data for pop-up 1206 (or the compressed voice data for pop-up 1207), the control unit 34 starts reproduction of these data at the same timing.

Next, details of the transition information 508 will be described with the use of FIG. 14.

A next reproduction information code 1301 is information specifying digital data 150 which the user can instruct to reproduce next when a vehicle-mounted DSRC device 20 is reproducing image data or the like stored in the target point information 506, and it is expressed with an identification code used for the information code 704 of the contents information 502. In this embodiment, one digital data 150 can store up to eight next reproduction information codes 1301. However, it goes without saying that it is also possible to adopt an embodiment in which seven or less or nine or more next reproduction information codes 1301 can be specified.

Next, details of the details information 509 will be described with the use of FIG. 15.

The details information 509 is information for facilitating search so that a user can find a desired page quickly in the case where digital contents are configured by multiple digital data 150 or in the case where multiple digital data 150 are stored in the memory unit 25. In this embodiment, up to eight pieces of details information 509 can be set. However, it goes without saying that it is also possible to adopt an embodiment in which seven or less or nine or more pieces of details information 509 can be specified.

Details information data 1401 stores a keyword clearly expressing the content of digital data 150. The keyword is set with any characters, numerals, symbols and the like. It is desirable that the length of one keyword is within about 20 double-byte characters at a maximum. A character string for display of details information 1402 is character string data used to display the keyword on the monitor. A phonogram character string for utterance of details information 1403 is TTS data for utterance used to output the keyword by speech.

By setting the details information 509, the user can easily find a page he wants to view conveniently. The details information 509 is suitable for realizing transition across multiple screens. For example, a search button is provided on a top page or the like displayed when the vehicle-mounted DSRC device 20 is powered on to accept an input, such as any character string, from the user. The vehicle-mounted DSRC device 20 searches for such digital data 150 that a keyword corresponding to the received character string or the like is included in the details information 509, and lists up the digital data 150. When any of the listed-up pages is selected by the user, the vehicle-mounted DSRC device 20 jumps the page to the selected page.

In this embodiment, since eight pieces of details information 509 can be stored for each digital data 150, eight keywords can be set. However, by devising the format of describing the details information data 1401, more keywords can be set.

For example, a keyword is set in the details information data 1401 in a format like "Washoku_WASHOKU_washoku (Japanese food)", with predetermined symbols (for example, "_") indicating separators among the keywords inserted. When the predetermined symbol is included, the control unit 34 judges the position of the symbol indicates separation among keywords and assumes that multiple keywords are set. In this example, the control unit 34 assumes all of "Japanese cuisine", "JAPANESE CUISINE" and "japanese cuisine" to be keywords. Thus, so-called fuzzy search is also possible.

For example, such digital data 150 that a keyword "coupon" is set in the details information data 1401 and digital data 150 without the keyword are distributed. The control unit 34 of the vehicle-mounted DSRC device 20 can extract only the digital data 150 in which the keyword "coupon" is set and display it on the monitor in accordance with a user's instruction.

It is also possible to secure predetermined n bits (n is an integer equal to or above 1) as a data area for the details information data 1401, associate a predetermined keyword with each bit in advance, and set the keyword by ON/OFF of each bit. For example, one bit is assigned to each of the three keywords of "coupon", "newly arrived" and "update" and sets each bit to 1 or 0. If the bit value is "101", it substantially means that the keywords "coupon" and "update" are set.

Next, details of the parking lot information 510 will be described with the use of FIG. 16.

The parking lot information 510 stores parking lot data for introducing parking lots existing around a shop. Since the information receiving apparatus (vehicle-mounted DSRC device 20) of this embodiment is mounted on a vehicle 100 such as an automobile, information about parking lots is important for the user to make a stop-off at a shop (to have the user make a stop-off at a shop).

The parking lot ID 1501 is a symbol or a number uniquely assigned to each parking lot. Parking lot details information 1502 stores detailed information about a parking lot indicated by the parking lot IDs 1501. Still information such as the names, coordinates and the like of parking lots is stored in the memory unit 25 of the vehicle-mounted DSRC device 20 together with the parking lot IDs 1501 as a map database. On the other hand, dynamic information, such as parking availability information, fee discount information, reservation availability and business time, is stored as the parking lot details information 1502.

A special item for parking lot 1503 is set when there is any information to be added other than the parking lot details information 1502. In the special item for parking lot 1503, such content that cannot be expressed in the parking lot details information 1502 can be described, such as "Congestion is expected today because of a festival being held." A phonogram character string for utterance of parking lot information 1504 is TTS data for utterance to be used to output the parking lot details information 1502 and/or the special item for parking lot 1503 by speech.

A set of the parking lot ID 1501, the parking lot details information 1502, the special item for parking lot 1503 and the phonogram character string for utterance of parking lot information 1504 is assigned to one parking lot. In this embodiment, parking lot information about up to 127 places can be provided. However, it goes without saying that it is also possible to adopt an embodiment in which parking lot information about 126 or less or 128 or more places can be specified.

The memory unit 25 stores a parking lot ID and information indicating the place of a parking lot (a latitude and longitude) in association with each other in advance. The control unit 34 can acquire the position of a parking lot indicated by a parking lot ID 1501 from this information stored in the memory unit 25. The control unit 34 can set the acquired parking lot position as a destination or a stopover in car navigation in accordance with a user's instruction.

Next, details of the driving support information 511 will be described with the use of FIG. 17.

Since the position of a parking lot is expressed with a latitude and longitude, the place where the parking lot exists is displayed planarly on the monitor when navigation is performed with the use of a two-dimensional map. However, in the case of an underground parking lot or a multistoried parking lot, there is a possibility that the user cannot be sufficiently guided to a place only with a latitude and longitude. The driving support information 511 is information to be assistance when the user drives around a parking lot. Digital data in which the driving support information 511 is stored is transmitted from a roadside apparatus 40 installed near a parking lot as digital data 150 specified "to be displayed" by the display/preservation code 801, and the control unit 34 reproduces the digital data 150 as soon as receiving it.

For example, a roadside apparatus 40 installed near the parking lot distributes such digital data 150 that route guidance in the parking lot and guidance for traffic around the parking lot (for example, information like "The parking lot exists straight ahead" in a place where visibility is not good, such as a narrow lane, and the like) are stored in the driving support information 511. The control unit 34 of a vehicle-mounted DSRC device 20 which has received this digital data 150 immediately causes an image or speech for attracting attention to be outputted using the driving support information 511.

Driving support image data 1601 is an image data body created in a predetermined image format and with a predetermined image size and the predetermined number of colors. The image format includes JPEG, GIF, PNG, bitmap and the like. When receiving digital data 150 storing the driving support information 511, the control unit 34 reads the driving support image data 1601 and causes it to be displayed on the display unit 33. The driving support image data 1601 includes an image format identifying flag, which is information specifying the format of the image, similarly to the main image data 1104.

A phonogram character string for utterance of driving support 1602 is the data body of speech for utterance created in the TTS format. The phonogram character string for utterance of driving support 1602 includes a language identifying flag and a speech format identifying flag, similarly to the TTS language data 1105.

Driving support compressed voice data 1603 is the data body of speech created in a predetermined compression format. The compression format includes IMA-ADPCM, MP3, AAC, CELP PCM and the like. The driving support compressed voice data 1603 includes a compression speech format identifying flag, which is information specifying the format of the driving support compressed voice data 1603, similarly to the compressed voice data 1106.

Voice reproduction order 1604 is information specifying which order the data are to be reproduced in, in the case where both of the phonogram character string for utterance of driving support 1602 and the driving support compressed voice data 1603 are included in the driving support information 511 as speech data, similarly to the voice reproduction order 1107.

A set of the driving support image data 1601, the phonogram character string for utterance of driving support 1602, the driving support compressed voice data 1603 and the voice reproduction order 1604 becomes one piece of driving support information.

Next, details of the taste information 512 will be described with the use of FIG. 18.

The taste information 512 is used for a service enterpriser (the information providing server 60) to select information a user likes to distribute it. The taste information 512 is a data table (a taste data table) showing information (digital data 150) distributed by a service enterpriser classified into multiple items (for example, up to 128 items) and is determined by the service enterpriser in advance. The taste data table can be updated by the service enterpriser as necessary.

For example, in the case where uplink information is transmitted from the vehicle-mounted DSRC device 20 of a contracted user for the first time or in the case where the version (taste information version 1701) of the taste information 512 included in uplink information from a vehicle-mounted DSRC device 20 is different (old) though the transmission is not for the first time, the information providing server 60 transmits digital data 150 including taste information 512 to the vehicle-mounted DSRC device 20.

The taste information version 1701 is the version of the taste information 512 (that is, the taste data table). When updating the taste data table, the service enterpriser also updates the taste information version 1701. A character string for display of taste information 1702 is character string data used to display a predetermined character string corresponding to a classification item on the monitor.

A phonogram character string for utterance of taste information 1703 is TTS data for utterance used to output a predetermined character string corresponding to a classification item by speech. A nest for display of taste information 1704 is a numerical value indicating the depth of a nest in the case of displaying a character string stored in the character string for display of taste information 1702.

FIG. 19 shows an example of a screen at the time when the content of the taste information 512 is displayed on the display unit 33. For example, a classification item "Life" is further classified into two items of "Hospital" and "Road Service". In this case, the nest of the classification item "Hospital" is the second layer under "Life". If the nest for display of taste information 1704 of the classification item "Life" is "0", then the nest for display of taste information 1704 of the classification item "Hospital" is "1".

A predetermined classification code is assigned to each classification item in advance. For example, 1, 2 and 3 are assigned to "Life", "Hospital" and "Pediatrics", respectively. In this embodiment, digital data 150 can be classified into up to 128 kinds. However, it goes without saying that it is also possible to adopt an embodiment in which the digital data 150 is classified into 127 or less or 129 or more kinds.

For example, a user can select information he wants a service enterpriser to distribute by checking a desired classification item on the screen shown in FIG. 19. The control unit 34 stores the selection result into the memory unit 25 as taste data. The control unit 34 also stores updated taste data into uplink information and transmits it to the information providing server 60. The information providing server 60 constructs digital data 150 on the basis of the received taste data and distributes it to the user (the vehicle-mounted DSRC device 20).

A roadside apparatus 40 may use taste data uplinked from a vehicle-mounted DSRC device 20 to extract only such digital data 150 that the content corresponds to the taste data and distribute it to the vehicle-mounted DSRC device 20. It is desirable that, when the version specified by the taste information version 1701 changes, that is, when the version of the taste data table changes, the control unit 34 causes taste data stored in the memory unit 25 currently to temporarily withdraw, causes a new taste data table to be stored in the memory unit 25 with an initial values, and then overwrites the new taste data with the taste data caused to temporarily withdraw to reflect the latter on the former. Thereby, there is no need to cause the user the trouble of setting the taste data again.

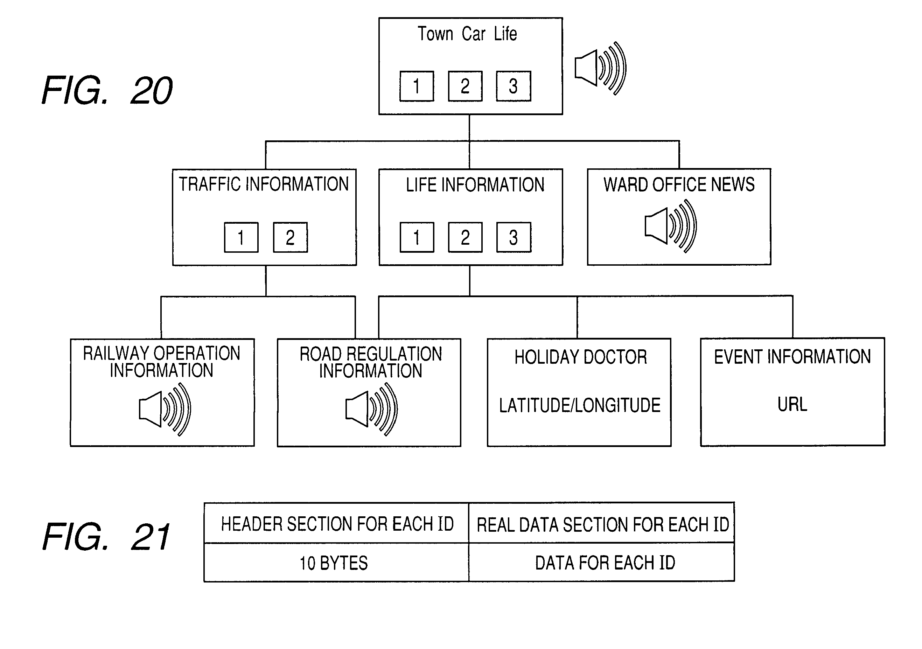

FIG. 20 is a diagram showing contents information included under ID=10 shown in FIG. 6 in a tree structure. By a method of causing the screen to transition in a tree structure to have a user search for intended information as shown in FIG. 20, it is basically possible to, from a finally reached information screen, set a destination of a vehicle-mounted DSRC device 20 or guide a vehicle to an target point or an alliance parking lot of the target point. It is also possible to guide the user to a particular website via IP connection. Since multimedia contents, such as text, speech by speech synthesis, compression speech and video, can be set for each of contents constituting a screen, in addition to still images, explanation of details by images and speech is possible.

A multi-contents format is configured to correspond to each of data for downlink and data for uplink. Here, the data for downlink is data used mainly for distribution of contents as described at step S109, and the data for uplink is data to be the basis for configuration of the data for downlink as described at step S107.

As shown in FIG. 21, the multi-contents data format is configured by a frame obtained by combining a header section (10 bytes) in which the amount of information about an ID assigned according to the type of contents and the real data section is described and the real data of the contents. The "application data" described before is configured by a collection of a plurality of the frames shown in FIG. 21.

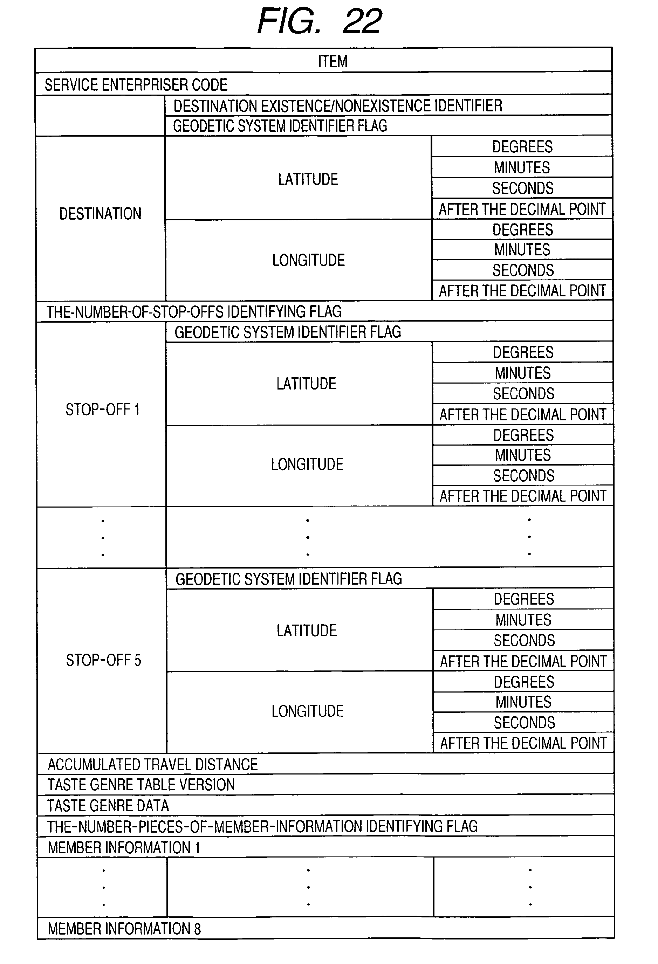

Next, a data format in uplink performed from a vehicle-mounted DSRC device 20 to a roadside apparatus 40 will be described with the use of FIG. 22. FIG. 22 is a diagram showing an example of data configuration in uplink performed from the vehicle-mounted DSRC device 20 shown in FIG. 1 to the roadside apparatus 40.

Uplink information includes "basic information", "accumulated travel distance information", "taste data table version information", "taste genre data", "member information" and the like. Since the uplink information shown in FIG. 22 includes information which may be handled as personal information, it is desirable that uplink is not performed until it is confirmed by a user's setting that the service enterpriser is in contract with the user.

As shown in FIG. 22, the "basic information" includes a service enterpriser code and latitude/longitude information about a destination and stopovers set for the vehicle-mounted DSRC device 20. It is possible to provide information about the areas in the direction of the destination and distribute information about information provision points (places where DSRC communication is possible) and the like in the direction of the destination, on the basis of the latitude/longitude information about the destination set for the vehicle-mounted DSRC device 20. As for the latitude/longitudes of the stopovers set for the vehicle-mounted DSRC device 20, up to five positions can be registered. It is possible to provide information about the areas in the directions of the stopovers and distribute information about information provision points (places where DSRC communication is possible) and the like in the direction of the stopovers, on the basis of the latitude/longitude information about the stopovers set for the vehicle-mounted DSRC device 20.

In the "accumulated travel distance information", the travel distance from the time point when a vehicle-mounted DSRC device 20 is mounted on a vehicle 100 is stored. The travel distance from the time point when the vehicle 100 starts traveling may be stored. Since the version of taste data which the vehicle-mounted DSRC device 20 has accumulated/uplinked is known from the "taste data table version information", it can be used for analysis of the uplinked taste data. It is desirable to, when updating the taste data table, reflect the set values of the taste data of the old version on the set values in the taste data table of the new version to reduce troublesomeness on the user.

In the "taste genre data", a taste data table with up to 96 items (12 items among them are reserved for a public information provision service) can be freely set, as described above. Since it becomes possible to provide information subdivided in accordance with the user's tastes according to the content of the business of a service enterpriser, improvement of the rate of reproducing distributed information can be expected.

In the "member information", basically the same content as that of details information 1 to 8 distributed under ID=40 in downlink can be recorded in member information 1 to 8. In this embodiment, by writing and storing membership benefits included in contents distributed from the information providing server 60 into the storage area for the member information 1 to 8, distribution of the membership benefits is realized.

The vehicle-mounted DSRC device 20 may write the time and the number of DSRC connections being established (connection information) into the storage area for the member information 1 to 8 and transmit the number and time of the connections to the roadside apparatus 40 and the information providing server 60 as uplink information. The information providing server 60 which has acquired the information adds the membership benefits under ID=40 of contents to be distributed on the basis of the information to transmit the contents to the roadside apparatus 40. The roadside apparatus 40 distributes the information to the vehicle-mounted DSRC device 20 via DSRC communication.

The vehicle-mounted DSRC device 20 may write the latest information code it could store, into the field of the member information 8 in the uplink data format. In this case, when communication is disconnected, the information providing server 60 can understand the information which the vehicle-mounted DSRC device 20 could store by reading the member information 8 and, therefore, can distribute the succeeding information. Since the user can receive distribution of the succeeding information even if communication is cut for some reason when receiving information distribution, time loss due to communication cutoff can be reduced.

In addition to the items described above, the uplink information may include "information about stop-offs in the past" or "advertisement view history information" not shown.

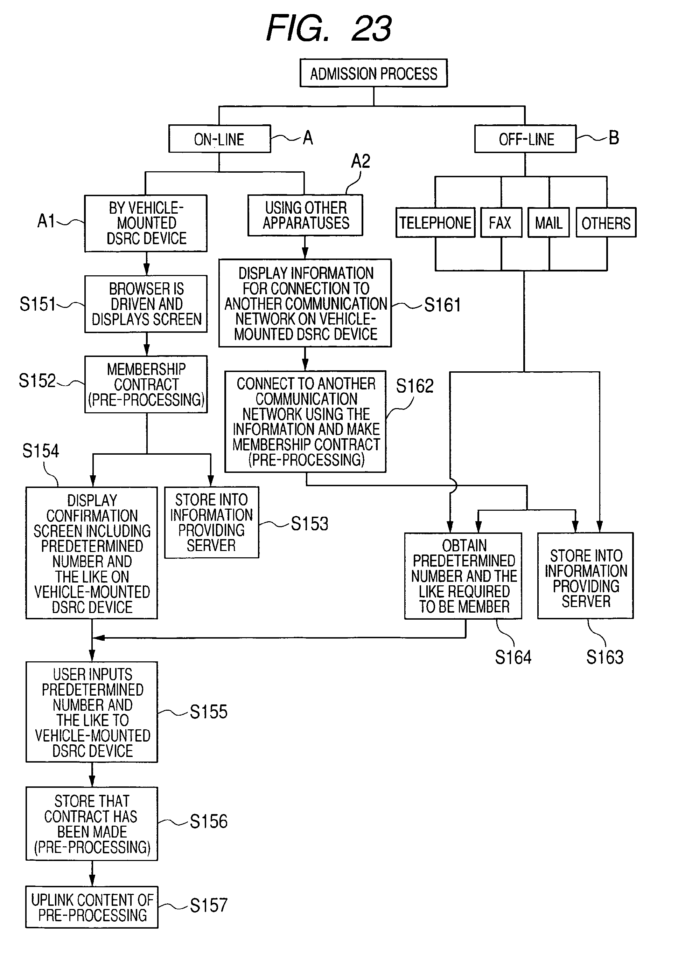

Next, kinds and a main flow of an admission process in the information provision system 10 configured as described above will be described with reference to FIG. 23 and the like.

The kinds of an admission process will be described first. The admission refers to get the authorization to receive particular contents, among contents distributed from a roadside apparatus 40, or display the particular contents on a vehicle-mounted DSRC device 20. The particular contents are benefits information about coupons and grant of points, or the latest information distributed preferentially. It is often the case that information (contents) by one service enterpriser is distributed from one roadside apparatus 40. However, contents from multiple service enterprisers may be distributed. There may be a case where contents by another service enterpriser is distributed from another roadside apparatus 40 or a case where contents by the same service enterpriser may be distributed from another roadside apparatus 40. Therefore, the admission is required not for each roadside apparatus 40 but for each service enterpriser.

The admission process includes a process of making a contract with a service enterpriser (which is an application process and a pre-processing) and a process of registering a contracted service enterpriser with the vehicle-mounted DSRC device 20. The process of making a contract with a service enterpriser can be performed off-line (using paper for admission) or on-line (using the vehicle-mounted DSRC device 20 for admission and using other means, such as a mobile phone and PC, for admission) as described later. In the case of performing the process off-line, a user makes a contract by notifying the ID (ASL-ID) of the vehicle-mounted DSRC device 20 he uses and his personal information to the enterpriser that he wants to make a contract with by writing them in a predetermined sheet at the window of the enterpriser's premises, as described later. As described above, the admission process can be performed in an on-line method A (hereafter referred to as "on-line A) and an off-line method B (hereafter referred to as "off-line B"). The on-line A includes a method A1 using the vehicle-mounted DSRC device 20 (hereafter referred to as "A1") and a method A2 using the vehicle-mounted DSRC device 20 to display guidance for admission but using a different apparatus to perform a temporary contract procedure which is a pre-processing (hereafter referred to as "A2"). The A1 system is executed in a system in the case where both of the vehicle-mounted DSRC device 20 and the roadside apparatus 40 can connect to the Internet. The A2 system is executed in a system in the case where any one or either of the vehicle-mounted DSRC device 20 and the roadside apparatus 40 cannot connect to the Internet.

The A1 system performs the following steps.

Step S151: When the vehicle-mounted DSRC device 20 performs "area-in", a predetermined process is performed, and a browser screen is displayed on the display unit 33 of the vehicle-mounted DSRC device 20. This predetermined process includes a process of the control unit 66 of the information providing server 60 judging the communication environment of the vehicle-mounted DSRC device 20 and the roadside apparatus 40.

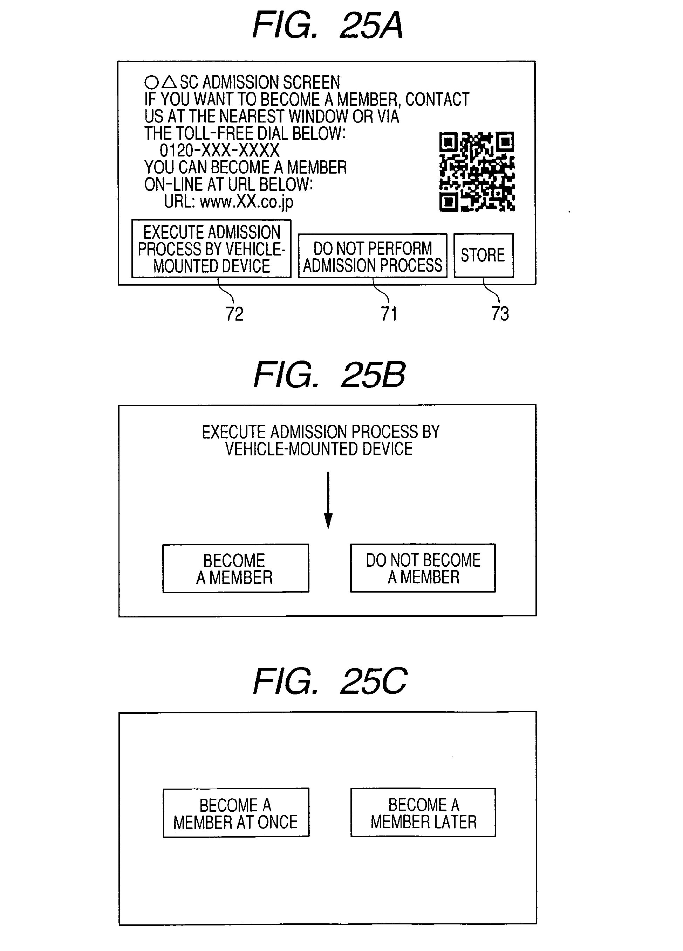

Step S152: The browser screen shows an invitation-for-admission screen. An example of this screen is shown in FIG. 25(A). When the user consents to be a member, a temporary membership contract is concluded. This membership contract corresponds a part of a pre-processing.

Step S153: When step 152 ends, the content is stored into the information providing server 60 (storing process).

Step S154: Accompanying the process of step S153, a confirmation screen on which a predetermined number required to make a formal contract is displayed on the display unit 33 of the vehicle-mounted DSRC device 20. This confirmation screen is provided by the control unit 66 of the information providing server 60 performing a transmission process. This confirmation screen may be a selection screen simply for selecting whether or not to consent to become a member. This selection process is controlled by the control unit 34 of the vehicle-mounted DSRC device 20.

Step S155: The user inputs the predetermined number recorded in the confirmation screen to the vehicle-mounted DSRC device 20. Thereby, the admission process is completed. The control unit 34 of the vehicle-mounted DSRC device 20 may perform control to perform display or speech output of "Input a predetermined number to become a member" in the confirmation screen. It is also possible to output a confirmation display for final confirmation, for example, any one or both of a confirmation screen and speech of "Do you perform a process of becoming a member?" or the like on the display unit 33 after input of the predetermined number.

Step S156: The control unit 34 of the vehicle-mounted DSRC device 20 records that the contract has been concluded in the uplink tag area. Specifically, the code of an appropriate enterpriser code is recorded in the basic information in the uplink tag area. As a result, the code of the enterpriser is described in the service enterpriser code field in uplink information.

Step S157: When performing the next "area-in" or when continuing the state of "area-in" for a long time, the control unit 34 of the vehicle-mounted DSRC device 20 transmits uplink information in which the code of the enterpriser is described in the service enterpriser code field to the roadside apparatus 40 when performing uplink after the process of step S156. The transmitted information is sent to the information providing server 60, and the control unit 66 of the information providing server 60 compares the content stored at step S153 with the received content. If both correspond to each other, the admission process ends completely. The contract is completed at this point of time.

The A2 system performs the following steps.

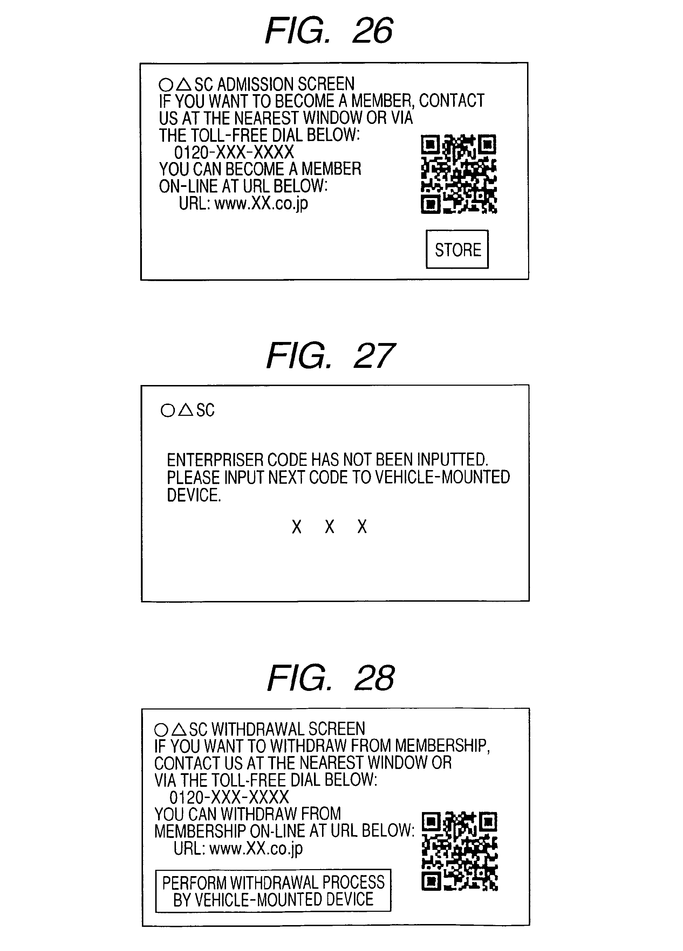

Step S161: When the vehicle-mounted DSRC device 20 performs "area-in", a process similar to step S151 is performed, and an invitation-to-membership screen is displayed on the display unit 33 of the vehicle-mounted DSRC device 20 is displayed or a notification is made. In the invitation-to-membership screen, there is displayed information required for a membership contract to be made through other communication networks, for example, the Internet. An example of this screen is shown in FIG. 26. As this information, there are a two-dimensional code (for example, a QR code) of an URL required for accessing a home page using a mobile phone number, an URL number of a home page enabling a membership contract.

Step 162: The user accesses the home page enabling a membership contract and performs an application process, which will be a pre-processing, using a mobile phone device and a communication apparatus such as a personal computer, on the basis of information required for the membership contract.

Step S163: The application is stored into the information providing server 60 via various means (storing process).

Step S164: When performing the application process by step S162, the user obtains a predetermined number and the like required to become a member. The information is obtained by the information being displayed on the browser when the application process is performed or by an e-mail including the information being received afterwards. After that, the processes of the steps S155, S156 and S157 described above are performed.

The membership contract by the off-line B is similar to that by the other systems. Specifically, the pre-processing (that is, application for a contract) is performed by application by telephone, application by FAX, mailing of a written application or the like. In the off-line B, processes similar to the processes of step S163 and step S164 are performed afterwards, and then, the processes of steps S155, S156 and S157 are performed.

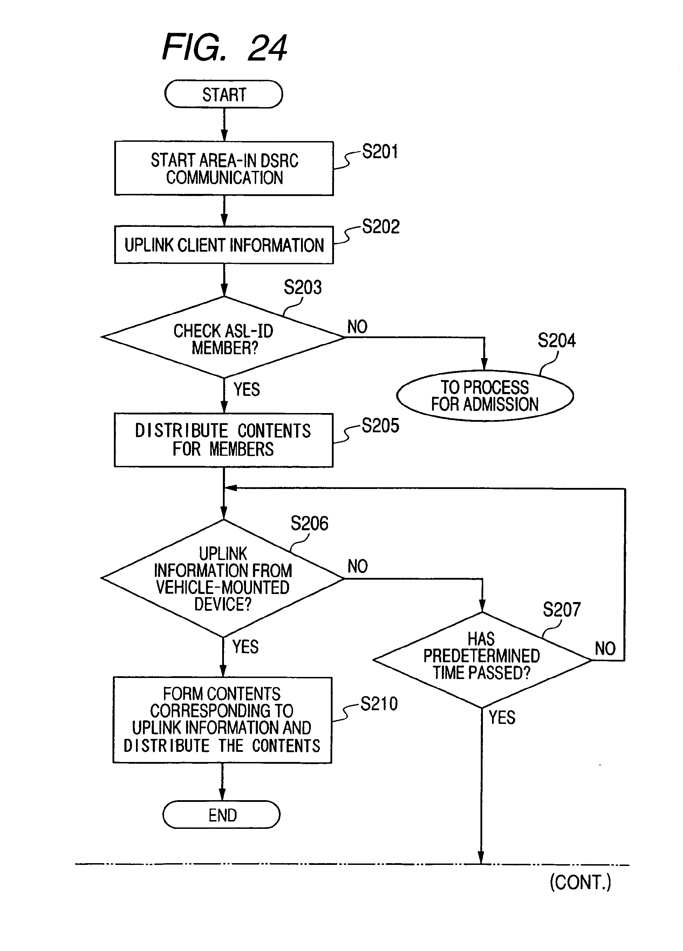

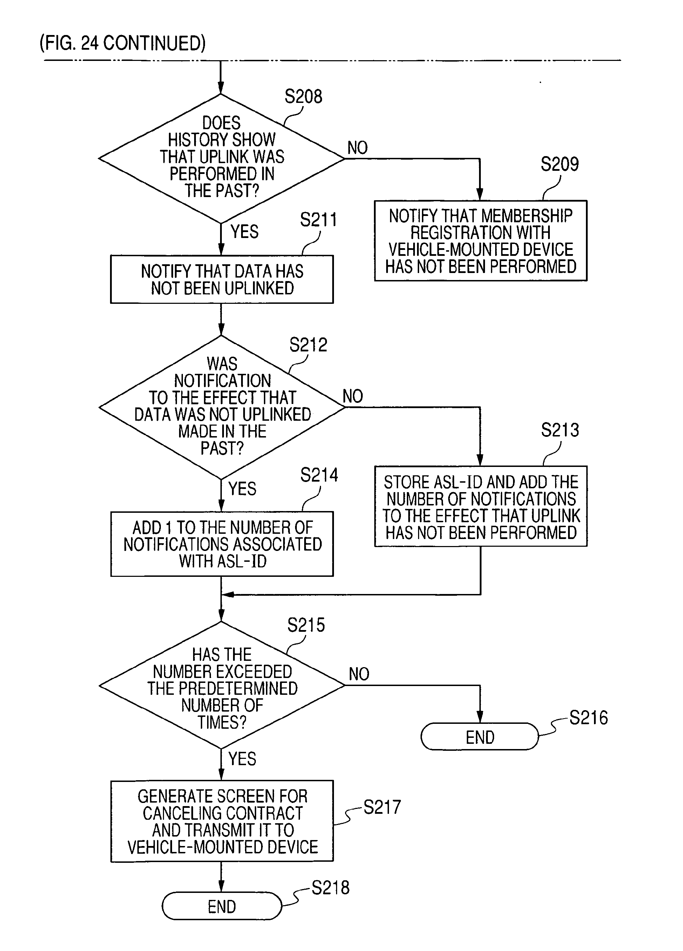

Next, description will be made on an example of a series of processes of admission and withdrawal to be performed by the control unit 66 of the information providing server 60 in the information provision system 10 configured as described above, with the use of FIGS. 5 and 24.

FIG. 24 is a flowchart showing the example of the series of processes of admission and withdrawal to be performed by the control unit 66 of the information providing server 60 shown in FIG. 1.

Step S201: First, power is turned on, and the process of step S100 is performed as shown in FIG. 5. After that, the information providing server 60 starts a predetermined DSRC communication connecting process after a vehicle-mounted DSRC device 20 performs "area-in". This process is similar to step S101.

Step S202: After step S201, a process similar to step S102 is performed, and client information data is uplinked. This uplink is similar to the process of step S103.

Step S203: A roadside apparatus 40 judges whether the user is a member or a nonmember from an ID (such as an ASL-ID) specific to the vehicle-mounted device in characteristics information. In this judgment, since the target ASL-ID or the like is stored in the information providing server 60, the user is judged to be a member if a transmitted ASL-ID or the like corresponds to the stored one. This judgment is performed by the control unit 66 of the information providing server 60. However, it may be performed by the roadside apparatus 40.

Step S204: In the case of a nonmember, the information providing server 60 transmits contents for invitation to membership, which are of the immediate display type, to the vehicle-mounted DSRC device 20. The contents sent at step S204 are contents regarded as suitable for the communication environment of the vehicle-mounted DSRC device 20 as a result of the control unit 66 of the information providing server 60 judging the communication environment. For example, in the case where the roadside apparatus 40 is provided with an environment for connection to the Internet, the information providing server 60 transmits an instruction signal for activating the browser to the vehicle-mounted DSRC device 20 if judging that the vehicle-mounted DSRC device 20 is also capable of communication via the Internet, and causes the vehicle-mounted DSRC device 20 to connect to the home page enabling application for a contract.

On the other hand, when any one or either of the roadside apparatus 40 and the vehicle-mounted DSRC device 20 are not provided with the environment for the Internet communication, the control unit 66 of the information providing server 60 performs control to transmit a screen for invitation for admission as shown in FIGS. 25(A) and 26, which is of the immediate display type, to the vehicle-mounted DSRC device 20. Here, the immediate display type means a type of not being accumulated inside the vehicle-mounted DSRC device 20 but being immediately displayed on the display unit 33 of the vehicle-mounted DSRC device 20.

In the case of distributing contents for invitation to membership, the information providing server 60 determines which contents to be distributed, with the following items (a part of which may overlap with the description above) as judgment criteria. (1) The content of the characteristics information includes a compatible language, a geodetic system (whether world or Japanese geodetic), a compatible DRM (which DRM the vehicle-mounted DSRC device 20 is compatible with), monitor resolution (with or without monitor; WQVGA, WVGA or the like), SVG-compatible, accumulation capacity of the navigation unit, and the like, and these are used for reference. (2) As described above, whether a browser is available is judged from the characteristics information, and whether to send contents having an URL for access via the IP system or send URL information (for example, a QR code) for a mobile phone and a PC is determined according to the vehicle-mounted DSRC device 20. (3) As another judgment, data to be transmitted may be changed according to whether the roadside apparatus 40 is capable of IP connection or not. If the roadside apparatus 40 is capable of IP connection, a screen for admission for membership, for example, a screen as shown in FIG. 25(A) is directly displayed on the display unit 33 of the vehicle-mounted DSRC device 20 by push-distributing the screen for admission via the IP system, as described above.

The user determines whether or not to become a member on the basis of the distributed information. If the user does not desire to become a member, he makes a selection to that effect and ends the process. For example, if the user selects a field 71 indicating "do not perform admission process" on the screen in FIG. 25(A), the invitation-for-admission screen in FIG. 25(A) is hidden. If the user desires to become a member, he selects whether to become a member at once or later. For example, if the user selects a field 72 for the admission process on the screen in FIG. 25(A), the screen shown in FIG. 25(B) appears. Then, by selecting "become a member" on the screen, the screen shown in FIG. 25(C) appears. If the user desires to become a member later, the URL information or the invitation screen itself is stored so that it can be called later. This storing process is performed by selecting a "store" field 73 in FIG. 25(A).

If the user desires to "become a member at once", he confirms the current communication area. For example, he confirms whether the IP connection by the vehicle-mounted DSRC device 20 is possible, whether WiMAX communication is possible or whether the communication is for mobile phones (there is a possibility that communication is impossible even by a mobile phone when the roadside apparatus 40 is in an underground parking lot). Information sent from the road side (the information providing server 60 or the roadside apparatus 40) is information suitable for the characteristic information about the vehicle-mounted DSRC device 20 based thereon. However, if communication is impossible by that system, judgment about whether or not registration is possible by other alternative means (such as registration by a mobile phone in the case where IP connection is impossible even if the vehicle-mounted device has a browser function) is included. Thereby, the user can make a registration on-line if communication is possible.

Step S205: If the user is judged to be a member at step S203, contents for members is distributed to the vehicle-mounted DSRC device 20. Both of the contents for members and contents for nonmembers may be distributed.

Steps S206 and S207: The control unit 66 of the information providing server 60 monitors whether uplink information having the enterpriser code is sent from the vehicle-mounted DSRC device 20 (step S206). If uplink information related to the service enterpriser does not exist, the control unit 66 judges whether a predetermined time has passed (step S207). If the predetermined time has not passed, the flow returns to step S206.

Steps S208 and S209: If the predetermined time has passed, the control unit 66 judges whether or not history shows that uplink information about the enterpriser was uplinked in the past (step S208). If the history does not show it, it is judged that the enterpriser code is not registered with the vehicle-mounted DSRC device 20, and a notification to that effect is given (step S209). This notification is also contents of the immediate display type. An example of this notification screen is shown in FIG. 27.

When the notified user has made a membership contract (pre-processing) but has not store the enterpriser code into the vehicle-mounted DSRC device 20, the following three scenes are conceivable: he stores the enterpriser code at once; he stores it later; and he does not make a registration because he does not think he made the contract. If the user registers the enterprise code at once, registration information is uplinked and control similar to that for an ordinary member is performed, because the roadside apparatus is performing polling. Specifically, contents suitable for the taste data in the uplink information is formed and sent to the vehicle-mounted DSRC device 20 (step S210). Destination information, stop-off information or the like may be used to transmit contents suitable therefor.

On the other hand, if the user makes a registration later or does not make a registration, the road side (the information providing server 60 and the roadside apparatus 40) judges that member information is not to be uplinked, distributes a predetermined immediate-display-type screen (for example, instruction contents instructing the user to leave the communication area) and ends the process. As for the immediate-display-type contents in the case where the user is a member but has not made a registration with the vehicle-mounted DSRC device 20, such that the provider code is displayed is conceivable.

The processes after step S211 indicate an example of a withdrawal process. Before describing this process, a general withdrawal process will be described.

The withdrawal process is not largely different from the admission process. Contents for the withdrawal process is transmitted to a user who became a member as taste data indicating an accumulated-type withdrawal process (or details information including data indicating that the contents are the withdrawal process). If desiring to withdraw from the membership, the user pushes a predetermined button, and the vehicle-mounted DSRC device 20 generates a screen for withdrawal. It is desirable that the screen for withdrawal is a screen similar to FIG. 25(A) ("admission" is replaced with "withdrawal") in which a QR code® and a URL are displayed and a telephone number or a contact address for withdrawal described, but other types are also possible. It is also possible to include a URL as target point information and activate the browser of the vehicle-mounted DSRC device 20 using it so that it is possible to jump to the screen for withdrawal. An example of the screen for withdrawal is shown in FIG. 28.

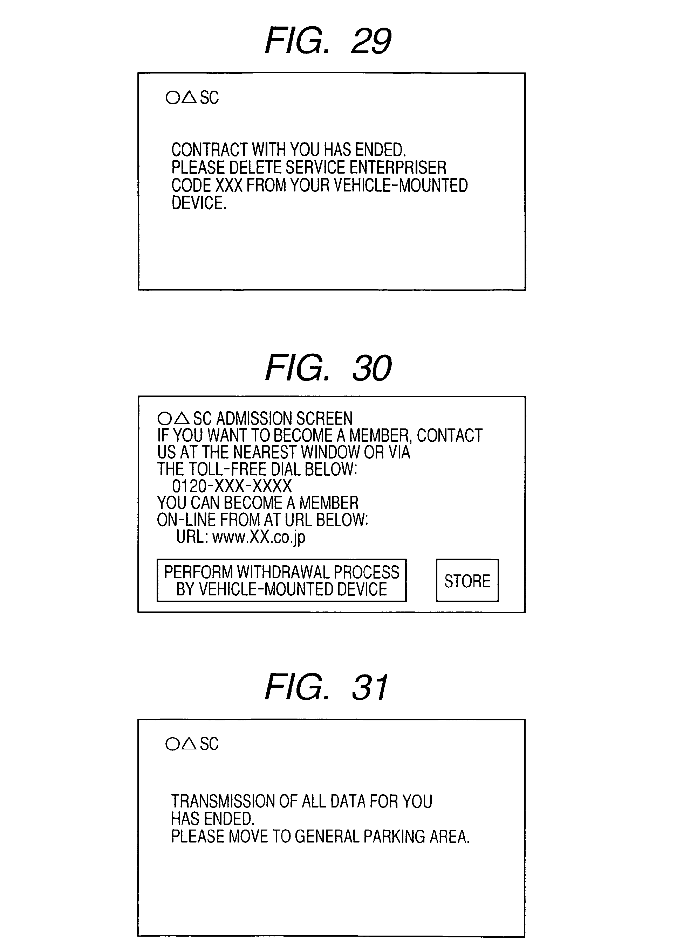

By the user deleting the enterpriser code in the vehicle-mounted DSRC device 20, the vehicle-mounted DSRC device 20 does not perform uplink any more. In the case where, even though the withdrawal process has been performed as a contract as a pre-processing, uplink information about the enterpriser is uplinked from the vehicle-mounted DSRC device 20, the service enterpriser may give a notification to that effect. An example of a notification screen for this is shown in FIG. 29. This case is on condition that the information providing server 60 stores the ASL-ID and the like even if the contract is cancelled. If, when data is uplinked from an unknown vehicle-mounted DSRC device 20, the user is judged to be a person who withdrew from the membership, the information providing server 60 may not store the ASL-ID and the like.

The user can express his intention to withdraw from membership not only canceling the contract with a service enterpriser but also by not uplinking uplink information about the enterpriser (deleting data about the service enterpriser from the vehicle-mounted DSRC device 20). In this case, if data is not uplinked from the user after the predetermined number of times or a predetermined time period after the roadside apparatus 40 requests the data to be uplinked, the control unit 66 of the information providing server 60 may cancel the contract and not judge the user to be a member.

Such a withdrawal process, that is, the withdrawal process by not uplinking data will be described below.

Steps S211 to S214: When it is judged that the history shows that the uplink information was uplinked in the past, at step S208, the control unit 66 notifies the vehicle-mounted DSRC device 20 that the uplink information about the enterpriser has not been uplinked (step S211). Then, the control unit 66 confirms whether a similar notification was sent in the past (step S212). If it was not sent, the control unit 66 records the ASL-ID and the like of the target vehicle-mounted DSRC device 20. If the notification to the effect that uplink was not performed was sent, the information providing server 60 performs a process of adding "1" to the number of notifications corresponding to the ASL-ID (step S214).

Steps S215 to S218: The control unit 66 judges whether or not the number of notifications has exceeded the predetermined number of times (step S215). If the predetermined number of times is not exceeded, the control unit 66 ends the series of processes (step S216). On the other hand, if the predetermined number of times is exceeded, the control unit 66 judges that, though application for a contract which is a pre-processing has been performed, formal registration is not desired, generates a screen for canceling the contract and transmits it to the vehicle-mounted DSRC device 20 (step S217). When this process ends, the series of processes ends (step S218).

In the embodiment of the present invention, it is possible for a user not only to obtain useful information from a predetermined enterpriser by making a membership contract with the predetermined enterpriser but also to prevent a lot of unnecessary information to be transmitted from enterprisers that the user is not under contract with. At the stage where application for a contract is performed, that is, at the stage of a pre-processing, the contract is not completed yet. By the user certainly registering an enterpriser code and the like with a vehicle-mounted DSRC device 20 (storing process) and performing uplink, the contract is completely concluded, and, finally, the user can become a formal member. Therefore, it does not happen that the information providing server 60 or a roadside apparatus 40 causes the user to become a member compulsorily or semi-compulsorily, and the user can become a member of only such an enterpriser that he really wants to become a member.

The above embodiment is an example of a preferred embodiment of the present invention. However, the present invention is not limited thereto, and various variations and modifications are possible within the range not departing from the spirit of the invention. For example, when the information providing server 60 receives a pre-processing by a transmission process, the control unit 66 of the information providing server 60 may transmit information (a screen or notification) indicating that an admission process or a withdrawal process has been completed, to the vehicle-mounted DSRC device 20 which is a terminal, according to the contents.

As the invitation-for-admission screen, a screen without a two-dimensional code may be used, as shown in FIG. 30. When distribution of contents to a member ends, the information providing server 60 may transmit, to the member (the vehicle-mounted DSRC device 20) for whom the contents distribution has ended, a screen for urging the member to leave the communication area (for example, the screen in FIG. 31) as immediate-display-type data so that communication with other members is enabled. If the roadside apparatus 40 is installed at a place where a vehicle 100 travels at a low speed and does not stop for a long time, such as the entrance or exit of a parking lot, the notification shown in FIG. 31 is unnecessary. Therefore, the roadside apparatus 40 may be installed at such a place.

When the withdrawal process is performed, the enterpriser code is deleted. It is desirable that membership benefits, for example, coupons and points are also deleted at the same time the enterpriser code is deleted. Furthermore, since it may require a long time to delete the enterpriser code after a pre-processing, it is preferable that the valid period of membership benefits is short. For example, it is preferable to set the valid period as 72 hours after distribution or seven days including a distribution day.

A base station may be provided with the functions of the information providing server 60. That is, an embodiment is also possible in which the control unit 44 of the roadside apparatus 40 has functions similar to those of the control unit 66 of the information providing server 60, and the roadside apparatus 40 performs all or a part of the processes performed by the information providing server 60. Furthermore, though a vehicle-mounted DSRC device 20 as a DSRC terminal is used in the above embodiment, for example, a mobile phone or PDA provided with a DSRC communication function may be used as the DSRC terminal, in addition thereto. As the communication system, other communication systems such as a wide area communication system may be used in addition to the DSRC system.

In the above embodiment, a roadside apparatus 40 installed mainly along a road side is used as a base station. In addition thereto, a wireless apparatus provided with a communication function and installed in a parking lot or on a street may be used as a base station. Such a form is also possible in which the manager of a base station is not an enterpriser related to contents to be distributed, and a person who operates the base station under contract with the enterpriser, that is, a person other than a service provision enterpriser installs and manages the base station.

The vehicle-mounted DSRC device 20 according to the above embodiment is configured by the DSRC unit 21, the navigation unit 27 and the control unit 34 as shown in FIG. 3. In addition, the vehicle-mounted DSRC device 20 may be provided with an ETC (electronic toll collection system) processing unit (not shown) capable of fee settlement, an IC card interface unit (not shown) into which an IC card used at the time of fee settlement is to be inserted, and the like, as the vehicle-mounted ITS device shown in "JEITA TT-6003". The terminal may be such that is not provided with a navigation function or a portable apparatus which is not always installed in the vehicle 100.

The DSRC unit 21 of the vehicle-mounted DSRC device 20 according to the above embodiment has a 3.5-GHz-band DSRC communication function. In addition, the DSRC unit 21 may be provided with, for example, an optical VICS interface, an FMVICS interface, an interface for 2.5-GHz-band DSRC communication, a communication interface with other media, as the vehicle-mounted ITS device shown in "JEITA TT-6003".

In the transaction in the information provision system 10 according to the above embodiment, polling for confirming whether uplink information has been updated or not, by step S108, is performed after notification of the uplink information at step S107, as shown in FIG. 5. In addition, for example, the information providing server 60 may distribute default contents, such as public information in the VICS format, after the notification at step S107.

All or a part of the functions of each component block held by the information provision system 10 in the above embodiment may be realized by software, or at least a part thereof may be realized by hardware. For example, all or a part of the processes by the control units 34 and 66 may be realized by one or more programs on a computer, or at least a part thereof may be realized by hardware.

For example, it is also possible to store a computer program for causing the vehicle-mounted DSRC device 20 to operate as all or a part of an apparatus into a computer-readable recording medium, such as a memory card, a CD (compact disk), a DVD (digital versatile disk) and an MO (magneto-optical) and distribute it, installing the program into a different computer, for example, a mobile phone, an audio apparatus, an electronic clock or the like to cause it to operate as the vehicle-mounted DSRC device 20 or execute the processes performed by the vehicle-mounted DSRC device 20. Furthermore, it is also possible to store the program in a disk device or the like held by a server apparatus on the Internet so that the program may be downloaded to a computer, which is to be the vehicle-mounted DSRC device 20, being placed on a carrier.

## Claims

1. An information provision system comprising a terminal mounted on a vehicle and capable of receiving contents for members and contents for nonmembers distributed by a predetermined communication system, a base station capable of transmitting both of the contents to the terminal, and an information providing server capable of providing both of the contents to the base station, wherein:
the information providing server comprises a control unit for checking the communication environment which the terminal or the base station has; and
the terminal comprises a control unit for performing at least three processes: an admission pre-processing for enabling reception of the contents for members or withdrawal pre-processing for disabling the reception, a storing process of storing the performed pre-processing or information obtained by the pre-processing, and a transmission process of transmitting the pre-processing or the content of the information to the base station when the terminal enters an area where the terminal can communicate with the base station.

2. The information provision system according to claim 1, wherein the control unit of the information providing server judges whether or not the base station is capable of connecting to another communication network, identifies means for performing the pre-processing on the basis of the result of the judgment and transmits information for the identified means.

3. The information provision system according to claim 1, wherein the control unit of the information providing server identifies the means for performing the pre-processing on the basis of characteristics information about the terminal transmitted from the terminal and transmits the information for the identified means.

4. The information provision system according to claim 1, wherein, if both of the base station and the terminal are capable of connecting to another same communication network, the information providing server causes the terminal to connect to that another communication network compulsorily and urges the pre-processing.

5. The information provision system according to any one of claims 1 to 4, wherein, when the information providing server receives the pre-processing or the content of the information by the transmission process, the control unit of the information providing server transmits information informing that an admission process or a withdrawal process has been completed depending on the content, to the terminal.

6. The information provision system according to any one of claims 1 to 4, wherein:
the pre-processing is a process of (1) connecting to a home page on the Internet of an enterpriser with authorization of admission or withdrawal by another apparatus and (2) performing an admission or withdrawal process on the home page; and
the storing process is a process of storing the result of the process into the terminal.

7. The information provision system according to any one of claims 1 to 4, wherein the storing process comprises (1) a process of temporarily registering the performed pre-processing with the terminal, (2) a confirmation process of the control unit of the terminal generating a screen for confirming whether the process is correct, and (3) a process of making a formal registration with the terminal if the correctness is confirmed by the confirmation process.

8. The information provision system according to any one of claims 1 to 4, wherein:
the pre-processing is a process of (1) the control unit of the information providing server judging that the terminal is not authorized to receive or display the contents for members, (2) the information providing server transmitting invitation contents for invitation to membership to the terminal via the base station, on the basis of the judgment, and (3) performing an admission process using another communication network on the basis of the invitation contents; and
the storing process is a process of recording a targeted enterpriser code in an enterpriser code field in the terminal.

9. The information provision system according to claim 8, wherein the invitation contents include an image on which a code enabling connection to a homepage on the Internet of an enterpriser with authorization of admission is displayed.

10. The information provision system according to any one of claims 1 to 4, wherein:
the pre-processing is a process of (1) the information providing server transmitting contents for a withdrawal process to the terminal, (2) displaying the contents for the withdrawal process on a display unit of the terminal, and (3) performing the withdrawal process on the basis of information on a displayed screen, and
the storing process is a process of deleting a targeted enterpriser code in the terminal.

11. A terminal for information transmission/reception mounted on a vehicle and capable of receiving contents for members and contents for nonmembers distributed from a base station by a predetermined communication system, the terminal comprising:
a control unit for performing at least three processes: an admission pre-processing for enabling reception of the contents for members or withdrawal pre-processing for disabling the reception, a storing process of storing the performed pre-processing or information obtained by the pre-processing, and a transmission process of transmitting the pre-processing or the content of the information to the base station when the terminal enters an area where the terminal can communicate with the base station.

12. An information provision method used for an information provision system comprising a terminal mounted on a vehicle and capable of receiving contents for members and contents for nonmembers distributed by a predetermined communication system, a base station capable of transmitting both of the contents to the terminal, and an information providing server capable of providing both of the contents to the base station, the information provision method comprising the steps of:
performing an admission process of enabling reception of the contents for members or withdrawal pre-processing for disabling reception;
storing the performed pre-processing or information obtained by the pre-processing; and
transmitting the pre-processing or the content of the information, to the base station when the terminal enters an area where the terminal can communicate with the base station.
